# EUROPÄISCHE PATENTSCHRIFT

(11) **EP 3 560 006 B1**
(45) Veröffentlichungstag und Bekanntmachung des Hinweises auf die Patenterteilung: **07.08.2024**
(21) Anmeldenummer: 17816658.3
(22) Anmeldetag: 08.12.2017
(51) Int. Cl.: H01G 11/74, H01M 10/052, H01M 50/186, H01M 50/191, H01G 9/10, H01G 2/10, H01G 11/80, C22C 21/06, C22C 21/04, C22C 21/02, C22C 21/00, C03C 8/24, C03C 8/08, C03C 3/19

(54) **GRUNDKÖRPER ZUR DURCHFÜHRUNG EINES LEITERS SOWIE GEHÄUSETEIL EINES GEHÄUSES, INSBESONDERE EINES BATTERIEGEHÄUSES MIT EINEM DERARTIGEN GRUNDKÖRPER**
MAIN PART FOR THE LEADTHROUGH OF A CONDUCTOR AND HOUSING PART OF A HOUSING, IN PARTICULAR OF A BATTERY HOUSING COMPRISING SAID MAIN PART
CORPS DE BASE SERVANT AU PASSAGE D'UN CONDUCTEUR AINSI QUE PARTIE D'UN BOÎTIER, EN PARTICULIER D'UN BOÎTER DE BATTERIE COMPRENANT UN CORPS DE BASE DE CE TYPE

(30) Priorität: 20.12.2016 US 201615385166
(43) Veröffentlichungstag der Anmeldung: 30.10.2019
(60) Teilanmeldung: 19180797.3
(73) Patentinhaber: SCHOTT AG, 55122 Mainz (DE)
(72) Erfinder: HARTL, Helmut, 1210 Wien (AT)
(74) Vertreter: Sawodny, Michael-Wolfgang
(86) Internationale Anmeldenummer: PCT/EP2017/082001
(87) Internationale Veröffentlichungsnummer: WO 2018/114392

(56) Entgegenhaltungen:
- EP-A1- 1 050 912
- EP-A2- 1 081 805
- EP-A2- 3 510 647
- WO-A1-2012/110242
- WO-A1-2012/167921
- WO-A1-2013/000414
- US-A- 563 694
- US-A1- 2015 197 072
- US-B1- 9 518 810

## Beschreibung

Die Erfindung betrifft eine Einheit aus einem Grundkörper mit einem eingeglasten Leiter, umfassend einen Grundkörper mit wenigstens einer Öffnung, wenigstens einen Leiter, insbesondere einen im Wesentlichen stiftförmiger Leiter, und ein Glas- oder Glaskeramikmaterial. Der wenigstens eine Leiter ist in dem Glas- oder Glaskeramikmaterial durch die Öffnung des Grundkörpers hindurchgeführt und eingeglast.

Die erfindungsgemäße Einheit kann bei den verschiedensten Gehäusen, insbesondere auch Gehäusematerialien, eingesetzt werden. Bevorzugt findet der Grundkörper in einem Gehäuse, insbesondere einem Batteriezellengehäuse oder einem Gehäuse für einen Kondensator und/oder Superkondensator Verwendung.

Als Batterien wird sowohl eine Einwegbatterie, die nach ihrer Entladung entsorgt und/oder recycelt wird, als auch ein Akkumulator verstanden.

Superkondensatoren, auch Supercaps genannt, sind, wie allgemein bekannt ist, elektrochemische Energiespeicher mit besonders hoher Leistungsdichte. Superkondensatoren besitzen im Unterschied zu Keramik-, Folien- und Elektrolytkondensatoren kein Dielektrikum im herkömmlichen Sinne. In ihnen sind insbesondere die Speicherprinzipien der statischen Speicherung elektrischer Energie durch Ladungstrennung in einer Doppelschichtkapazität sowie die elektrochemische Speicherung elektrischer Energie durch Ladungstausch mit Hilfe von Redoxreaktionen in einer Pseudokapazität verwirklicht.

Superkondensatoren umfassen insbesondere Hybridkondensatoren, dabei insbesondere Lithium-Ionen-Kondensatoren. Deren Elektrolyt umfasst üblicherweise ein Lösungsmittel, in dem leitfähige Salze gelöst sind, üblicherweise Lithiumsalze. Superkondensatoren werden vorzugsweise in Anwendungen eingesetzt, in denen eine große Energiemenge für eine relativ kurze Zeit oder für eine sehr hohe Zahl von Lade-/ Entladezyklen benötigt wird. Superkondensatoren sind insbesondere vorteilhaft im Automobilbereich einsetzbar, insbesondere im Bereich der Rekuperation von Bremsenergie. Andere Anwendungen sind natürlich ebenso möglich.

Akkumulatoren, bevorzugt Lithium-Ionen-Batterien, sind für verschiedene Anwendungen vorgesehen, wie beispielsweise tragbare elektronische Geräte, Mobiltelefone, Motorwerkzeuge sowie insbesondere Elektrofahrzeuge. Die Batterien können traditionelle Energiequellen wie beispielsweise Blei-Säure-Batterien, Nickel-Cadmium-Batterien oder Nickel-Metallhydridbatterien ersetzen.

Lithium-Ionen-Batterien sind seit vielen Jahren bekannt. Diesbezüglich wird beispielsweise auf "Handbook of Batteries, David Linden, Herausgeber, 2. Auflage, McGrawhill, 1995, Kapitel 36 und 39" verwiesen.

Verschiedene Aspekte von Lithium-Ionen-Batterien sind in einer Vielzahl von Patenten beschrieben. Beispielsweise seien genannt US 961,672, US 5,952,126, US 5,900,183, US 5,874,185, US 5,849,434, US 5,853,914 sowie US 5,773,959.

Lithium-Ionen-Batterien, insbesondere für Anwendungen in einer Automobil-Umgebung, weisen in der Regel eine Vielzahl von einzelnen Batteriezellen auf, die miteinander in Serie geschaltet werden. Die miteinander in Reihe bzw. in Serie geschalteten Batteriezellen werden zu sogenannten Batteriepacks zusammengefasst, mehrere Batteriepacks dann zu einem Batteriemodul, das auch als Lithium-Ionen-Batterie bezeichnet wird. Jede einzelne Batteriezelle besitzt Elektroden, die aus einem Gehäuse der Batteriezelle herausgeführt werden. Gleiches gilt für die Gehäuse von Superkondensatoren.

Insbesondere für die Anwendung von Lithium-Ionen-Batterien und/oder Kondensatoren und/oder Superkondensatoren, bevorzugt in der Automobil-Umgebung, müssen eine Vielzahl von Problemen wie Korrosionsbeständigkeit, Beständigkeit bei Unfall oder Schwingungsfestigkeit gelöst werden. Ein weiteres Problem ist die Dichtheit, insbesondere hermetische Dichtheit, der Batteriezellen und/oder Gehäusen von Kondensatoren und/oder Superkondensatoren über einen langen Zeitraum. Die Dichtheit beeinträchtigen können z. B. Undichtigkeit im Bereich der Elektroden der Batteriezelle beziehungsweise der Elektrodendurchführung der Batteriezelle und/oder des Gehäuses von Kondensatoren und/oder Superkondensatoren. Derartige Undichtigkeiten können beispielsweise hervorgerufen werden durch Temperaturwechselbelastungen und mechanische Wechselbelastungen, wie beispielsweise Vibrationen im Fahrzeug oder die Alterung des Kunststoffes. Ein Kurzschluss oder Temperaturänderungen der Batterie beziehungsweise Batteriezelle kann zu einer verminderten Lebensdauer der Batterie beziehungsweise Batteriezelle führen. Ebenso wichtig ist die Dichtheit in Unfall- und/oder Notfallsituationen.

Um eine bessere Beständigkeit bei Unfällen sicherzustellen, schlägt die DE 101 05 877 A1 beispielsweise ein Gehäuse für eine Lithium-Ionen-Batterie vor, wobei das Gehäuse einen Metallmantel umfasst, der auf beiden Seiten offen ist und verschlossen wird. Der Stromanschluss beziehungsweise die Elektroden sind durch einen Kunststoff isoliert. Nachteilig an den Kunststoffisolierungen sind die limitierte Temperaturbeständigkeit, die begrenzte mechanische Beständigkeit, die Alterung und die unsichere Dichtheit über der Lebensdauer. Die Stromdurchführungen sind bei den Lithium-Ionen-Batterien gemäß dem Stand der Technik somit nicht ausreichend dicht, insbesondere nicht hermetisch dicht in beispielsweise das Deckelteil der Li-Ionen-Batterie eingebaut. Des Weiteren sind die Elektroden verquetschte und lasergeschweißte Verbindungsbauteile mit zusätzlichen Isolatoren im Innenraum der Batterie.

Ein weiteres Problem bei den Lithium-Ionen-Batterien im Stand der Technik war, dass die Batteriezellen einen großen Bauraum aufwiesen und aufgrund der hohen Ströme durch Widerstandsverluste sehr rasch Erwärmung und damit Temperaturänderungen auftraten.

Aus der DE 27 33 948 A1 ist eine Alkalibatterie bekanntgeworden, bei der ein Isolator wie z. B. Glas oder Keramik unmittelbar durch eine Schmelzverbindung mit einem Metallteil verbunden ist.

Eines der Metallteile ist elektrisch mit einer Anode der Alkalibatterie und das andere elektrisch mit einer Kathode der Alkalibatterie verbunden. Bei den in der DE 27 33 948 A1 verwandten Metallen handelt es sich um Eisen oder Stahl. Leichtmetalle wie Aluminium sind in der DE 27 33 948 A1 nicht beschrieben. Auch die Verschmelztemperatur des Glas- oder Keramikmaterials ist in der DE 27 33 948 A1 nicht angegeben. Bei der in der DE 27 33 948 A1 beschriebenen Alkalibatterie handelt es sich um eine Batterie mit einem alkalischen Elektrolyten, der gemäß der DE 27 33 948 A1 Natriumhydroxid oder Kaliumhydroxid enthält. Eine Erwähnung von Li-Ionen-Batterie findet sich in der DE 27 33 948 A1 nicht.

Aus der DE 698 04 378 T2 bzw. der EP 0 885 874 B1 ist ein Verfahren zur Herstellung von asymmetrischen organischen Karbonsäureestern und zur Herstellung von wasserfreien organischen Elektrolyten für Alkali-Ionen-Batterien bekanntgeworden. Auch Elektrolyte für wieder aufladbare Lithium-Ionenzellen sind in der DE 698 04 378 T2 bzw. EP 0 885 874 B1 beschrieben.

Materialien für den Zellsockel, der die Durchkontaktierung aufnimmt, sind nicht beschrieben, lediglich Materialien für den Anschlussstift, der aus Titan, Aluminium, einer Nickellegierung oder rostfreiem Stahl bestehen kann.

Die DE 699 23 805 T2 bzw. EP 0 954 045 B1 beschreibt eine RF-Durchführung mit verbesserter elektrischer Wirksamkeit. Bei den aus der EP 0 954 045 B1 bekannten Durchführungen handelt es sich nicht um eine Glas-Metall-Durchführung. In der EP 0 954 045 B1 werden Glas-Metall-Durchführungen, die unmittelbar innerhalb beispielsweise der Metallwand einer Verpackung ausgebildet werden, als nachteilig beschrieben, da derartige RF-Durchführungen auf Grund der Versprödung des Glases nicht dauerhaft sind.

Die DE 690 230 71 T2 bzw. EP 0 412 655 B1 beschreibt eine Glas-Metall-Durchführung für Batterien oder andere elektrochemische Zellen, wobei als Gläser mit einem SiO₂-Gehalt von ungefähr 45 Gew.-% verwandt werden und als Metalle, insbesondere Legierungen verwandt werden, die Molybdän und/oder Chrom und/oder Nickel umfassen. Die Verwendung von Leichtmetallen ist in der DE 690 23 071 T2 ebenso wenig beschrieben wie Verschmelztemperaturen bzw. Verschmelzungstemperaturen für die verwandten Gläser. Auch die Materialien für die stiftförmigen Leiter sind gemäß DE 690230 71 T2 bzw. EP 0 412 655 B1 Legierungen, die Molybdän, Niob oder Tantal umfassen.

Aus der US 7,687,200 ist eine Glas-Metall-Durchführung für Lithium-Ionen-Batterien bekannt geworden. Gemäß der US 7,687,200 war das Gehäuse aus Edelstahl und der stiftförmige Leiter aus Platin/Iridium. Als Glasmaterialien sind in der US 7,687,200 die Gläser TA23 und CABAL-12 angegeben. Gemäß der US 5,015,530 handelt es sich dabei um CaO-MgO-Al₂O₃-B₂O₃-Systeme mit Verschmelztemperaturen von 1025° C bzw. 800° C. Des Weiteren sind aus der US 5,015,530 Glaszusammensetzungen für Glas-Metall-Durchführungen für Lithium-Batterien bekannt geworden, die CaO, Al₂O₃, B₂O₃, SrO und BaO umfassen, deren Verschmelztemperaturen im Bereich 650° C - 750° C liegen und damit zu hoch sind für eine Verwendung zusammen mit Leichtmetallen.

Aus der US 4,841,101 ist eine Durchführung bekanntgeworden, bei der ein im wesentlicher stiftförmiger Leiter mit einem Glasmaterial in einen Metallring eingeglast wird. Der Metallring wird dann wiederum in eine Öffnung beziehungsweise Bohrung eines Gehäuses eingesetzt und durch Löten beispielsweise nach Einspringen eines Lötringes, mit der Innenwand beziehungsweise Bohrung verbunden, insbesondere stoffschlüssig. Der Metallring besteht aus einem Metall, das im Wesentlichen denselben beziehungsweise einen ähnlichen thermischen Ausdehnungskoeffizient aufweist wie das Glasmaterial, um den hohen thermischen Ausdehnungskoeffizienten des Aluminiums des Batteriegehäuses zu kompensieren. Bei der in der US 4,841,101 beschriebenen Ausführungsform ist die Länge des Metallringes stets kürzer als die Bohrung beziehungsweise Öffnung im Gehäuse. Angaben zu den Glaszusammensetzungen sind in der US 4,841,101 nicht gemacht, auch eine spezielle Verwendung der Durchführung beispielsweise für Batterien, insbesondere Li-Ionen-Akkumulatoren ist nicht beschrieben.

Aus der WO 2012/110242 A4 ist eine Durchführung, insbesondere durch ein Gehäuseteil eines Gehäuses, insbesondere eines Batteriegehäuses, bevorzugt aus einem Metall, insbesondere einem Leichtmetall, bevorzugt Aluminium, eine Aluminiumlegierung, AlSiC, Magnesium, einer Magnesiumlegierung, Titan, einer Titanlegierung, Stahl, rostfreier Stahl oder Edelstahl, bekannt geworden, wobei ein Leiter in einen Grundkörper eingeglast wird, beispielsweise mit einem Glas- oder Glaskeramikmaterial und der Grundkörper mit dem eingeglasten Leiter in eine Öffnung des Gehäusebauteils eingesetzt wird. Dabei beschreibt die WO 2012/110242 A4, den Grundkörper mit eingeglastem Leiter mit dem Gehäusebauteil durch Laserschweißen zu verbinden. In der WO 2012/110242 A4 wird hierzu der Grundkörper auf dem Gehäusedeckel des Gehäuseteils laserverschweißt.

In der WO 2012/110242 A4 wird ebenfalls ein Grundkörper gezeigt, der über Entlastungseinrichtungen verfügt, beispielsweise Nuten. Ein derartiger, mit Nuten versehener Grundkörper ist aber in die Öffnung eingelassen und mit den Seitenwänden der Öffnung verbunden. Aus der WO 2012/110242 A4 ist bekannt, derartige Grundkörper mit einer umlaufenden Nut als Entlastungseinrichtung über die gesamte Dicke mit dem Gehäuseteil durch ein Schweißverfahren zu verbinden. Des Weiteren zeigt die WO 2012/110242 A4 lediglich eine einzige umlaufende Nut als Entlastungseinrichtung des Grundkörpers.

Nachteilig an der Ausgestaltung gemäß der WO 2012/110242 A4 war, dass beim Laserschweißen die Verschweißung entlang der Grenzfläche des Grundkörpers und des Gehäusebauteils erfolgen muss. Dieser Prozess ist schwierig zu steuern, da der Laserstrahl sehr genau der Kontur des Ausschnitts des Gehäusebauteils und/oder des Grundkörpers folgen muss. Insbesondere bei der Verwendung von Leichtmetallen als Material für das Gehäusebauteil und auch als Material für den Grundkörper hat es sich gezeigt, dass bei ungenauer Prozessführung und/oder Variation der Energie des Laserstrahls Fehler in der Verschweißung auftreten können. Die Leistung des Laserstrahls führt zu einem hohen thermischen Eintrag in das Glas und/oder Glaskeramikmaterial. Des Weiteren führt die heiße Schweißzone zu Spannungen. So dehnt sich durch den thermischen Eintrag der Grundkörper, wohingegen das Glas- und/oder Glaskeramikmaterial im Wesentlichen unverändert bleibt. Die sich hieraus ergebende Zugspannung des Grundkörpers wirkt gegen die Druckspannung des Glas-und/oder Glaskeramikmaterials auf den Grundkörper und führt zu Undichtigkeiten im Glas- und/oder Glaskeramikmaterial. Generell ist eine Schweißung, insbesondere eine Laserverschweißung von Grundkörpern mit einem Gehäusebauteil aus Leichtmetall, insbesondere Aluminium problematisch. Dies gilt ganz besonders im Falle die Einglasung in den Grundkörper in Form einer Druckeinglasung erfolgt ist. Die Erfinder haben erkannt, dass bei einer Verschweißung eines Aluminiumbauteils, beispielsweise eines Aluminiumgrundkörpers, mit einer Glas- und/oder Glaskeramikdurchführung ein weiteres Problem auftreten kann. Insbesondere wenn wie oben beschrieben eine Druckeinglasung ausgebildet wird. Diese liegt vor, wenn der Ausdehnungskoeffizient von Glas- und/oder Glaskeramikmaterial und umgebendem Metall unterschiedlich sind und das Metall, beispielsweise das Aluminium, auf das Glasmaterial einen Druck und damit eine Spannung ausübt. Durch das Einschweißen kann das das Glasmaterial umgebende Aluminium seine Festigkeit verlieren oder seine Festigkeit kann zumindest soweit reduziert werden, so dass diese nicht mehr ausreicht, um einen ausreichend hohen Druck auf das Glasmaterial auszuüben. Die Durchführung wird in der Folge undicht. Dies ist darauf zurückzuführen, dass bei Einwirkung hoher Temperaturen das Aluminium erweicht und Festigkeit verliert, so dass der notwendige Druck auf das Glasmaterial nicht mehr aufgebaut werden kann.

Aus der EP 3 510 647 A2 ist eine Durchführung bekannt geworden, bei der ein elektrischer Leiter von einem keramischen Material umgeben ist, welches in einem flexiblen Metallkörper aufgenommen ist.

Die US 5,643,694 B zeigt eine Durchführung für eine elektrochemische Zelle, mit einem in einem Glasmaterial eingebrachten elektrischen Leiter und zwei Nuten.

Die EP 1 081 805 A1 zeigt einen Konnektor mit einem Gehäuse, wobei der Stift des Konnektors an ein anderes Gehäuse angeschlossen wird.

WO 2012/167921 A1 und EP 1 050 912 A1 offenbaren einen Leiter, der in einer Öffnung eines Grundkörpers eingeglast ist.

Aufgabe der Erfindung ist es, eine Einheit aus einem Grundkörper mit eingeglastem Leiter anzugeben, mit der die Probleme des Standes der Technik vermieden werden können.

Die Aufgabe der Erfindung wir durch eine Einheit mit den Merkmalen des Anspruches 1 gelöst. Außerdem wird die Aufgabe durch eine Kombination aus einem Gehäuseteil eines Gehäuses mit einer darin aufgenommenen erfindungsgemäßen Einheit mit den Merkmalen des Anspruchs 9 gelöst.

Für eine Einglasung eines Glas- und/oder Glaskeramikmaterials in einen Grundkörper, bestehend zumindest teilweise aus einem Leichtmetall, insbesondere Aluminium, kann das Leichtmetall bestimmte Eigenschaften, insbesondere Festigkeiten aufweisen. Eine Eigenschaft ist hierbei die Streckgrenze des Materials des Körpers, insbesondere des Grundkörpers, in den die Einglasung vorgenommen wird. Die Streckgrenze ist ein Werkstoffkennwert und bezeichnet diejenige Spannung, bis zu der ein Werkstoff bei einachsiger und momentfreier Zugbeanspruchung keine dauerhafte plastische Verformung zeigt. Bei Unterschreiten der Streckgrenze kehrt das Material nach Entlastung elastisch in seine ursprüngliche Form zurück, bei Überschreiten verbleibt dagegen eine Formveränderung, bei einer Probe also eine Verlängerung. Statt der Streckgrenze kann auch für Werkstoffe die 0,2 % Dehngrenze oder Elastizitätsgrenze R _{p0,2} angegeben werden. Im Gegensatz zur Streckgrenze ist die Elastizitätsgrenze immer eindeutig aus dem Nennspannungs-Totaldehnungs-Diagramm ermittelbar. Die 0,2 % Dehngrenze ist diejenige (einachsige) mechanische Spannung, bei der die auf die Anfangslänge der Probe bezogene bleibende Dehnung nach Entlastung genau 0,2 % beträgt. Bei absolut reinem Aluminium liegt die Streckgrenze bei 17 N/mm², bei handelsüblichem Aluminium steigt Sie auf 34 N/mm². Für Aluminiumlegierungen kann sie in Abhängigkeit von den Legierungselementen bis zu 400 N/mm² betragen. Die Streckgrenze wird durch bekannte Verfahren gemessen. Die Streckgrenze ist mittels Zugversuch einfach zu ermitteln. Ein solcher Zugversuch ist der Zugversuch ISO 6892, mit dem die Streckgrenze oder die Dehngrenze R _{p0,2} ermittelt wird. Der Zugversuch an Metall gem. ISO 6892 wird üblicherweise auf einer Universalprüfmaschine / Zugprüfmaschine durchgeführt. Zu unterscheiden ist die Streckgrenze von Aluminium oder Aluminiumlegierungen im Ursprungszustand bei Raumtemperatur und nach einer Temperaturbehandlung, beispielsweise der Erwärmung beim Einglasen und/oder wie beschrieben beim Einschweißen. Die Offenbarung umfasst daher Gehäusebauteile und/oder Grundkörper zur Ausbildung einer Durchführung, insbesondere einer Glas- und/oder Glaskeramikdurchführung, wobei die Gehäusebauteile und/oder Grundkörper Metalle, insbes. Leichtmetalle, umfassen, welche nach Erwärmen immer noch eine ausreichend hohe Streckgrenze aufweisen. Beim Einglasen erfolgt eine Erwärmung bevorzugt auf Temperaturen im Bereich 450° C bis 600° C, insbesondere 520° C bis 560° C. Bevorzugt erfolgt beim Einglasen eine Erwärmung auf ungefähr 540° C.

Der vorgenannte Grundkörper ist mit einem Bauteil, insbesondere Gehäuseteil, verbindbar. Das Bauteil, insbesondere Gehäuseteil, kann aus einem Leichtmetall bestehen, und die Verbindung mit dem Grundkörper erfolgt bspw. mit einer Schweißverbindung. Die Erfinder haben in einem zweiten Aspekt der Offenbarung erkannt, dass die Schweißverbindung vorteilhaft bestimmte Materialzusammensetzungen aufweist, um eine zuverlässige Verschweißung zu ermöglichen. Insbesondere vorteilhaft weist die Schweißverbindung eine andere Materialzusammensetzung auf als diejenige der einzelnen zu verschweißenden Bauteile.Die Offenbarung umfasst daher bestimmte, im Weiteren näher beschriebene Materialien für Grundkörper, Geometrien von Grundkörpern und korrespondierende Geometrien und Materialien von Bauteilen, insbesondere Gehäuseteilen. Diese Erkenntnis ist generell auf Schweißverbindungen von Leichtmetallbauteilen übertragbar.

Beim Verschweißen des Grundkörpers mit dem Gehäuseteil kann die Einglasung durch thermisch induzierte mechanische Belastung beschädigt werden. Die Erfindung umfasst gemäß einem dritten Aspekt der Erfindung einen Grundkörper, der Mittel umfasst, insbesondere geometrische Mittel, welche die mechanische Belastung der Einglasung beim Einschweißen des Grundkörpers in das Gehäuseteil zumindest so weit reduzieren, dass eine zuverlässige Einglasung auch nach dem Herstellen der Schweißverbindung vorhanden ist.

In einem weiteren Aspekt der Offenbarung ist ein Gehäuseteil zur Aufnahme einer erfindungsgemäßen Einheit mit Grundköper so ausgestaltet, dass es optimal mit dem vorbeschriebenen Grundkörper und/oder den vorgenannten Materialien zusammen wirkt. Insbesondere umfasst diese Ausgestaltung geeignete Geometrien in dem Bereich des Gehäuseteils, welches zur Aufnahme des Grundkörpers vorgesehen ist.

Alle diese einzelnen Aspekte der Erfindung, wie oben beschrieben, wirken in einzelnen Kombinationen oder besonders vorteilhaft auch insgesamt synergistisch zusammen, um eine zuverlässige, dichte und rationell herzustellende Durchführung durch ein Gehäuseteil aus Leichtmetall bereit zu stellen.

Gemäß der Erfindung wird durch eine Öffnung des Grundkörpers wenigstens ein Funktionselement hindurchgeführt. Das Funktionselement ist im Allgemeinen ein elektrischer Leiter, insbesondere ein im Wesentlichen stiftförmiger Leiter. Das Funktionselement kann aber auch ein mechanischer Halter, ein Thermoelement, ein Lichtwellenleiter usw. sein. Das Funktionselement ist in einem Glas- und/oder Glaskeramikmaterial in der Öffnung des Grundkörpers gehalten und durch diese hindurchgeführt.

Der Körper, insbesondere der Grundkörper kann ein Leichtmetall, insbesondere eine Aluminiumlegierung mit einer Streckgrenze nach Erwärmen auf Temperaturen bevorzugt größer 520° C bis auf maximal 560° C für 1 bis 60, bevorzugt 5 bis 30 Minuten größer als 40 ^{N}/mm², bevorzugt größer als 50 ^{N}/mm², insbesondere größer als 80 ^{N}/mm², bevorzugt im Bereich 80 ^{N}/mm², bis 150 ^{N}/mm² aufweisen. Es wurde herausgefunden, dass die Leichtmetalle, insbesondere Aluminium, bevorzugt Aluminiumlegierungen, nur dann, wenn sie über die oben erwähnten Eigenschaften verfügen, eine ausreichende Kompression für dichte, insbesondere hermetisch dichte Druckeinglasungen zur Verfügung stellen.

Besonders bevorzugt aufgrund der Streckgrenze sind Aluminiumlegierungen, die einen Mg-Anteil von mehr als
0,5 Gew-%, bevorzugt mehr als 1 Gew-%, insbesondere mehr als 2,5 Gew-% bis maximal 8 Gew-%, bevorzugt bis maximal 5,0 Gew-% aufweisen. Ganz besonders bevorzugt sind Aluminiumlegierungen mit 4,0 - 4,9 Gew-% Mg, 0,4 - 1 Gew-% Mn und 0,05 - 0,25 Gew-%Cr. Die Einglasung kann in einen Grundkörper aus einem Leichtmetall erfolgen, der dann in die Öffnung eines Gehäuses eingesetzt wird. Alternativ ist es möglich den Leiter direkt in die Öffnung des Gehäuses einzuglasen. In einem solchen Fall besteht dann bevorzugt das Gehäuse aus einem Leichtmetall, insbesondere Aluminium oder einer Aluminiumlegierung.

Mit den ausgewählten Aluminiumlegierungen mit dem genannten hohen Mg-Anteil wird auch nach Temperaturbehandlung beim Einglasen ein ausreichend festes Material zur Verfügung gestellt, das auch nach Erkalten, z.B. nach dem Einglasen, nicht zu stark erweicht und eine ausreichend hohe Kompression für eine Druckeinglasung zur Verfügung stellt, so dass eine dauerhaft hermetisch dichte Durchführung erhalten wird. Unter hermetisch dicht wird in vorliegender Erfindung verstanden, dass die Helium-Leckrate geringer als 1₊10⁻⁸ mbar·l/sec bei einem Druckunterschied von 1 bar ist.

Bei einer Druckeinglasung übt das Material des Grundkörpers eine Druckspannung auf das Glas- oder Glaskeramikmaterial aus. Um dies zu gewährleisten, wird der thermische Ausdehnungskoeffizient des Leichtmetalls, insbesondere der Aluminiumlegierung des Grundkörpers, grösser als der des Glas- und/oder Glaskeramikmaterials gewählt, in das das Funktionselement, insbesondere der Leiter, eingeglast wird.

Die Druckeinglasung hat den Vorteil, dass eine hohe mechanische Festigkeit, insbesondere eine mechanisch robuste Einglasung mit einer hermetischen Dichtheit zur Verfügung gestellt wird. Unter Dichtheit, insbesondere hermetische Dichtheit versteht man in dieser Offenbarung, dass die Helium-Leckrate geringer als 10⁻⁸ mbar·l/sec bei einem Druckunterschied von 1 bar ist. Insbesondere kann mit der Erfindung eine hermetisch dichte Einglasung bereitgestellt werden, mit der die oben genannte Heliumleckrate erzielt wird. Um eine Druckeinglasung zu erhalten, unterscheidet sich der thermische Ausdehnungskoeffizient des Glas- oder Glaskeramikmaterials von dem des Grundkörpers. Der thermische Ausdehnungskoeffizient für das Material des Grundkörpers liegt beispielsweise im Bereich 18·10⁻⁶ /K bis 30·10⁻⁶ /K und für die Glas- und/oder Glaskeramikmaterialien zwischen 15·10⁻⁶ /K bis 25·10⁻⁶ /K, wobei der thermische Ausdehnungskoeffizient des Materials des Grundkörpers größer gewählt wird als der des Glas- und/oder Glaskeramikmaterials.

Neben der Druckeinglasung ist die chemische Kompatibilität des Metalls des Grundkörpers auf der einen und des Glas- und/oder Glaskeramikmaterials auf der anderen Seite für das Ausbilden einer dauerhaft stabilen und belastbaren Durchführung von Bedeutung. Bei manchen Durchführungen wird vermutet, dass ebenso chemische Bindungskräfte zwischen dem Metall des Grundkörpers und dem Glas- und/oder Glaskeramikmaterial der Durchführung im Grenzflächenbereich zu der Stabilität der Einglasung und damit der gesamten Durchführung beitragen. Prinzipiell können Bestandteile des Metalls des Grundkörpers in das Glas- und/oder Glaskeramikmaterial der Durchführung diffundieren, zumindest in einem Grenzflächenbereich. Die eindiffundierten Bestandteile können die chemischen Bindungskräfte herabsetzen und/oder sogar das Glasgefüge destabilisieren, so dass Brüche der Durchführung auftreten können.

Ganz besonders bevorzugt ist es, wenn als Aluminiumlegierungen für den Grundkörper Aluminiumlegierungen, die Mn und/oder Mg und/oder Si und/oder Zr als Zusatz enthalten, verwandt werden.

Besonders bevorzugt ist es, wenn die Legierung, insbesondere die Aluminiumlegierung in Summe 2 bis 10 Gew-%, insbesondere 3 bis 8 Gew-%, ganz bevorzugt 4 bis 6 Gew-%, an Zusätzen umfassen. Ganz besonders bevorzugt als Aluminiumlegierung ist Al 5083, die 4,5 Gew.-% Mg und 0,7 Gew.-% Mn umfasst. Die Zusätze im Aluminium, insbesondere Mg und Mn, sind dafür verantwortlich, dass auch bei Temperatureinwirkung von hohen Temperaturen über längere Zeit die Legierungen nicht erweichen, sondern die Aluminiumlegierung über eine ausreichende Festigkeit verfügen. Dies stellt sicher, dass eine ausreichende Kompression auf das Glasmaterial auch nach Erwärmen beim Einglasen ausgeübt werden kann und so die Dichtheit der Durchführung sichergestellt wird. Die Erfinder haben erkannt, dass diese Materialien außerdem kompatibel im oben genannten Sinn zu den üblicherweise eingesetzten Glas- und/oder Glaskeramikmaterialien sind.

Soll der zuvor beschrieben Grundkörper, der das Funktionselement aufnimmt, mit einem umgebenden Gehäuse verbunden werden, insbesondere durch Verschweißen, so ergibt sich ein Problem, wenn der Grundkörper mit der Einglasung aus Aluminium oder Aluminiumlegierung in ein Gehäuse aus Aluminium oder einer Aluminiumlegierung eingeschweißt werden soll und die Aluminiumlegierungen unterschiedliche Zusätze wie Mg etc. umfasst. Das Verschweißen von unterschiedlichen Aluminiumlegierungen führt oft zu Rissen. Rissfreiheit und damit eine hohe hermetische Dichtheit sind nur schwer zu erreichen. Die Erfinder haben herausgefunden, dass die Wahrscheinlichkeit der Rissbildung stark ansteigt, wenn der Mg-Anteil oder der Si-Anteil in der Legierung reduziert wird und weniger als 1,5 Gew-% beträgt. Die Rissbildung ist auf einen Verfestigungsprozess mit unterschiedlichen Verfestigungstemperaturen der unterschiedlichen Komponenten beim Verschweißen zurückzuführen. Um dies zu vermeiden, können Füllmaterialien wie Si, Mn, Mg oder Zr zumindest in den Bereich des Gehäuses und/oder Grundkörpers eingebracht werden, der verschweißt werden soll. Hierdurch kann eine Rissbildung in der Verschweißzone minimiert werden. Besonders bevorzugt sind für eine gute Verschweißbarkeit die Aluminiumlegierungen mit einem hohen Mg-Anteil von mehr als 3 Gew-%. Als Aluminiumlegierung, die sowohl die Anforderungen an eine hohe Festigkeit als auch gute Verschweißbarkeit erfüllt, haben die Erfinder die Aluminiumlegierung Al 5083 mit 4,5 Gew-% Mg und 0,7 Gew-% Mn ermittelt ohne Beschränkung hierauf. Die Füllmaterialien können auch als Schweißförderstoff bezeichnet werden. Für einen Grundkörper, der zumindest teilweise aus einem Leichtmetall mit Zusätzen oder Schweißförderstoffen, bevorzugt in Form von Legierungsbestandteilen, insbesondere einer Aluminiumlegierung, die Mg und/oder Si und/oder Zr und/oder Mn umfasst, besteht, wurde herausgefunden, dass für diese Materialien eine gute Verschweißbarkeit mit einem Leichtmetall, bevorzugt Aluminium, insbesondere auch Reinstaluminium erreicht wird. Eine besonders gute Verschweißbarkeit wird dann erreicht, wenn vorteilhaft der Mg-Anteil der Aluminiumlegierung im Bereich 2 bis 10 Gew.-%, insbesondere 3 bis 8 Gew.-%, ganz bevorzugt 4 bis 6 Gew.-% liegt.

Wird ein erster Körper aus einem Leichtmetall, beispielsweise Aluminium, mit einem zweiten Körper aus Leichtmetall mit Zusätzen oder Schweißförderstoffen verbunden, so schmilzt sowohl erstes Material wie zweites Material im Bereich der Verbindung auf, so dass eine Mischung aus erstem Material und zweitem Material entsteht. Bevorzugt ist dann der Anteil an Schweißförderstoffen im Bereich der Verbindung gegenüber dem Anteil im zweiten Körper niedriger. Die Materialzusammensetzung im Bereich der Verbindung unterscheidet sich demnach von derjenigen der einzelnen Verbindungspartner. Bevorzug ist es bei Verbindung von zwei Körpern aus Leichtmetall, wobei der erste Körper ein Leichtmetall und der zweite Körper ein Leichtmetall mit Schweißförderstoffen, insbesondere in Form von Legierungsbestandteile ist, so dass dann, wenn eine Schweißverbindung zwischen erstem und zweiten Körper ausgebildet wird in der Schweißverbindung aufgeschmolzenes Material des ersten Körpers und aufgeschmolzenes Material des zweiten Körpers ergebend eine Mischung vorhanden ist und der Gehalt der Schweißförderstoffe in der Mischung geringer als der Gehalt der Schweißförderstoffe im zweiten Bauteil ist.

Besonders bevorzugt ist es, wenn der Grundkörper wenigstens einen Flansch mit einer Dicke umfasst und der Anteil an Zusätzen oder Schweißförderstoffen, insbesondere der Mg-Anteil im Flansch, insbesondere an die Dicke des Flansches anpassbar ist. Umgekehrt wäre es auch möglich, die Dicke des Flansches dem Anteil an Zusätzen oder Schweißförderstoffen anzupassen.

Überraschenderweise wird durch die Verwendung eines Leichtmetalles mit Schweißförderstoff, oder Zusätzen beispielsweise einer Aluminiumlegierung mit Mn und/oder Mg und/oder Si und/oder Zr sichergestellt, dass zwei unterschiedliche Bauteile, beispielsweise Aluminium und ein weiteres, bestehend aus einer Aluminiumlegierung, umfassend Mn und/oder Mg und/oder Si und/oder Zr, rissfrei miteinander verschweißt werden können. Die rissfreie Verschweißung stellt eine hermetische dichte Verbindung mit einer Helium-Leckrate kleiner 1·10⁻⁸ mbar·l/sec Verfügung.

Es wurde des Weiteren herausgefunden, dass überraschenderweise eine mikrorissfreie Verbindung von Aluminium mit einer Aluminiumlegierung dann erreicht wird, wenn der Mn-Anteil und/oder Mg-Anteil und/oder der Si-Anteil und/oder der Zr-Anteil größer 1,5 Gew.-%, bevorzugt größer 2 Gew.-% ist. Liegt der Mn-Anteil und/oder Mg-Anteil und/oder der Si-Anteil und/oder der Zr-Anteil unter 1,5 Gew.-%, so steigt die Mikrorissbildung signifikant an. Die Mikrorissbildung ist auf einen Verfestigungsprozess mit unterschiedlichen Verfestigungstemperaturen der unterschiedlichen Komponenten beim Verschweißen zurückzuführen Besonders bevorzugt ist es, wenn man den Anteil an Mg und/oder Mn und/oder Si und/oder Zr im Bereich der Verschweißung so einstellt, dass keine Mikrorisse auftreten. Die Obergrenze für die Zusätze oder Schweißförderstoffe liegt bei 10 Gew-%, bevorzugt 8 Gew-%, insbesondere 6 Gew-%. Bei einer Verbindung zweier Bauteile, beispielsweise einem Grundkörpers und einem Gehäuse jeweils aus Leichtmetall können die Zusätze oder Schweißförderstoffe im Grundkörper oder aber auch im Gehäuse, in das der Grundkörper eingesetzt wird, vorhanden sein.

Die oben beschriebene gute Verschweißbarkeit ist insbesondere dann von Bedeutung, wenn ein Bauteil, insbesondere Gehäuseteil, bevorzugt aus einem Leichtmetall, insbesondere Aluminium, bevorzugt Reinstaluminium, in einer Öffnung einen Grundkörper aufnimmt, wobei der Grundkörper zusammen mit der Einglasung vorteilhaft die Öffnung verschließt. Besonders bevorzugt für eine Verbindung von Grundkörper und Bauteil, insbesondere Gehäuseteil, ist, wenn das Gehäuseteil einen Ausschnitt oder Gegenflansch zur Aufnahme eines Teils des Grundkörpers , insbesondere eines Vorsprunges, bevorzugt eines Flansches, aufweist. Bevorzugt weist der Gegenflansch eine Dicke auf, die gegenüber der Dicke des Gehäuseteils reduziert ist. Der Gegenflansch des Gehäuseteils ist bevorzugt in Form einer Stufenbohrung ausgeführt. Diese Geometrie kann auch durch Prägen des Gehäuseteils und/oder andere geeignete Verfahren erzeugt werden. Ebenso möglich sind Kombinationen von entsprechenden Verfahren. Der Gegenflansch hat in einer Ausführungsform eine im Wesentlichen senkrecht zum Leiter verlaufende erste Grenzfläche und der Teil des Grundkörpers, insbesondere der Vorsprung oder Flansch, eine im Wesentlichen senkrecht zum Leiter verlaufende zweite Grenzfläche. Erste und zweite Grenzfläche liegen einander direkt gegenüber und/oder schließen aneinander an, wobei bevorzugt der Gegenflansch des Gehäuseteils in den Vorsprung oder Flansch des Grundkörpers bevorzugt L-förmig eingreift. Bevorzugt sind erste und zweite Grenzfläche verbunden, vorzugsweise fest verbunden, insbesondere hermetisch dicht verbunden. Die Verbindung erfolgt beispielsweise durch Schweißen, bevorzugt Laserschweißen. Das Ergebnis ist eine Schweißverbindung zwischen Gehäuseteil und Grundkörper. Je nach Ausbildung der Grenzfläche von Grundkörper und Gehäuseteil ist das Schweißen, insbesondere das Laserschweißen, eine Überlapp- und/oder Stumpfschweißung. Durch die Verwendung einer Aluminiumlegierung mit einem Mg- und/oder Mn- und/oder Si- und/oder Zr-Anteil von 2 bis 10 Gew.-% wird eine mikrorissfreie Schweißverbindung von Grundkörper und Gehäuseteil zur Verfügung gestellt. Durch die Ausgestaltung des Bauteils, insbesondere Gehäuseteils mit einem Gegenflansch oder Ausschnitt zur Aufnahme eines Teils des Grundkörpers, beispielsweise eines Flansches oder Vorsprunges des Grundkörpers, gelingt es, den Grundkörper auf rationelle und zuverlässige Art und Weise in das Gehäuseteil zu fügen, eine Presspassung wie in der WO 2012/110242 A4 ist nicht nötig. Darüber hinaus ist es mit der angegebenen Anordnung eines Gegenflansches oder Ausschnittes, der einen Vorsprung bzw. Flansch des Grundkörpers aufnimmt, möglich, dass die Flächen ohne Spalt miteinander verbunden werden. Die Bereiche des Grundkörpers und des Gehäuseteils überlappen und es wird durch Material des Gehäuseteils und/oder durch Material des Grundkörpers geschweißt. Gegenüber der Stumpfstoßverbindung, wie aus der WO 2012/110242 A4 bekannt, kann der Grundkörper und das Gehäuseteil mit einer geringeren Laserenergie miteinander verbunden werden, wobei auch schmälere Lasernähte realisiert werden können und/oder die Spur der Lasernaht keine sonderlich genaue Positionierung erfordert. Der Betrag der Laserenergie wird dabei im Wesentlichen vom Material sowie der Dicke des Materials beeinflusst, durch das hindurchgeschweißt wird.

Werden das Gehäuseteil zur Aufnahme des Grundkörpers und der Grundkörper mit dem Gehäuseteil in einem Schweißbereich durch Stumpfschweißen verbunden, so umfasst der Schweißbereich in einer Position (P₁, P₂) einen ersten Teil des Grundkörpers und einen zweiten Teil des Gehäuseteiles. Besonders bevorzugt ist es, wenn die Position (P₁, P₂) des Schweißbereiches in Abhängigkeit von Mg- und/oder Si- und/oder Zr-Anteil der Aluminiumlegierung des Grundkörpers und/oder Gehäuseteiles gewählt wird. Des Weiteren sind die Schweißbereiche auch durch eine Tiefe (T₁, T₂) charakterisiert, wobei die Tiefe (T₁, T₂) der Schweißbereiche in Abhängigkeit vom Mg- und/oder Si- und/oder Zr-Anteil der Aluminiumlegierung gewählt ist.

Weist der Grundkörper einen Flansch oder Vorsprung auf und das Gehäuseteil einen Ausschnitt oder einen Gegenflansch, so kann der Grundkörper mit dem Gehäuseteil in einem ersten Schweißbereich durch Überlappschweißen und in einem zweiten Schweißbereich durch Stumpfstoßschweißen verbunden werden. In einem solchen Fall weist der zweite Schweißbereich beim Stumpfstoßschweißen eine Position (P₁, P₂) in Abhängigkeit vom Mg-Anteil der Aluminiumlegierung des Grundkörpers und/oder Gehäuseteiles auf.

Besonders bevorzugt ist es, wenn der Ausschnitt oder Gegenflansch des Gehäuseteils eine im Wesentlichen senkrecht zum Leiter verlaufende erste Grenzfläche aufweist und der Teil des Grundkörpers, insbesondere des Flansches oder Vorsprungs, eine im Wesentlichen senkrecht zum Leiter verlaufende zweite Grenzfläche aufweist und erste und zweite Grenzfläche einander gegenüberliegen. Dies kann insbesondere durch eine Stufenbohrung im Gehäuseteil erreicht werden. Dabei bedeutet der Begriff Stufenbohrung nicht, dass zur Herstellung tatsächlich spanabhebend gebohrt wird, sondern spanlose Verfahren zur Herstellung der gewünschten Struktur sind sogar bevorzugt, wie zum Beispiel Einprägen und/oder Umformen.

Insbesondere vorteilhaft kann die Tiefe der Stufenbohrung und die Materialdicke des Vorsprungs oder Flansches des Grundkörpers so gewählt werden, dass die Oberflächen des Grundkörpers und des Gehäuseteils miteinander fluchten. Die Dicke des Flansches oder Vorsprunges und die Dicke des Ausschnittes oder Gegenflansches des Gehäuseteiles, mit dem der Grundkörper mit Flansch verbunden werden soll, bestimmen unter anderem die notwendige Energie und damit den Wärmeeintrag in den Grundkörper. Das Dickenverhältnis der Dicke des Flansches zur Dicke des Gegenflansches bestimmen neben der beschriebenen Wahl der Materialien die Schweißparameter. Besonders bevorzugt ist es, wenn die Dicke des Flansches am Grundkörper zwischen 50 % und 100 %, bevorzugt 70 % bis 80 % des Gegenflansches beträgt In einer besonders bevorzugten beträgt die Dicke des Flansches 100 % der Dicke des Gegenflansches, d. h. der Flansch am Grundkörper und der Gegenflansch oder Ausschnitt des Gehäuses weisen dieselbe Dicke auf. Bevorzugt können die Materialien für das Gehäuse und den Grundkörper unterschiedlich sein. Insbesondere ist es möglich die Dicke des Flansches oder des Gegenflansches an die Zusätze oder Schweißförderstoffe des Materials beispielsweise das Material des Grundkörpers anzupassen. Umgekehrt kann auch die Dicke des Flansches oder des Gegenflansches an die Zusätze oder Schweißförderstoffe des Materials angepasst sein.

Um die beim Schweißprozess auftretende Wärme abzuleiten und den Grundkörper sowie das Gehäuseteil thermisch und mechanisch zu entlasten, weist der Grundkörper gemäß der Erfindung mindestens zwei Nuten oder Vertiefungen, insbesondere zwei umlaufende Nuten oder Vertiefungen mit einem Abstand A zueinander auf. Durch die Nuten wird ein thermischer Fluss durch den Grundkörper reduziert und/oder mechanische Belastung des Grundkörpers in Richtung senkrecht zur Achse des Leiters vermieden, da der Grundkörper in Richtung senkrecht zur Achse des Leiters verformbar, bevorzugt reversibel verformbar ist. Anstelle der Nuten kann auch eine Vielzahl von Einstichen vorgesehen sein, die bevorzugt nebeneinanderliegend ausgebildet werden.

Durch die Ausgestaltung des Grundkörpers mit wenigstens zwei Nuten in einem Abstand A zueinander wird insbesondere der thermische Fluss beispielsweise von der Außenseite des Grundkörpers zur Innenseite reduziert oder sogar fast ganz unterbrochen. Hierdurch wird ein Wärmeeintrag beispielsweise durch das Laserschweißen an der Außenseite zur Innenseite des Grundkörpers, an der die Einglasung erfolgt, weitgehend vermieden. Dies wiederum führt dazu, dass in das Glas- und/oder Glaskeramikmaterial keine Spannungen, insbesondere keine Zugspannungen, die auf die Einglasung wirken und dadurch die Kompression auf das Glasmaterial reduzieren, eingebracht werden. Da die Kompression nicht durch Zugspannungen reduziert wird, ist die Dichtheit der Einglasung gewährleistet. Darüber hinaus ermöglichen die zwei Nuten, dass der Grundkörper sich verformen kann. Hierdurch können mechanische Belastungen, die auf des Glas- oder Glaskeramikmaterial übertragen werden, effizient abgefangen werden.

Besonders bevorzugt ist es, wenn die wenigstens zwei Nuten oder Vertiefungen so ausgelegt sind, dass mechanische Belastungen des Grundkörpers in Richtung senkrecht zur Achse des Stifts vermieden werden und die Achse des Stifts im Wesentlichen nicht verkippt.

Um den Grundkörper mit beispielsweise einem Gehäuse einfach verbinden zu können ist der Grundkörper stufenförmig ausgebildet mit einer Dicke D₃ im Bereich eines Vorsprungs oder Flansches des Grundkörpers, wobei sich bevorzugt zumindest eine erste Nut oder Vertiefung im Bereich des Flansches befindet. Besonders bevorzugt ist es, wenn der Grundkörper zwei umlaufende Nuten oder Vertiefungen mit einem Abstand A zueinander aufweist, durch welche ein thermischer Fluss durch den Grundkörper reduziert wird. Bevorzugt liegt dieser Abstand A zwischen 0,1 mm und 1 mm, bevorzugt zwischen 0,1 mm und 0,5 mm. Durch die Wahl des Abstandes A kann eingestellt werden, wie groß der thermische Fluss durch den Grundkörper von der Außenseite zur Innenseite ist und vorteilhaft ebenso die mechanische Entlastungsfunktion der Nuten. Hierdurch ist es möglich, den Wärmeeintrag einzustellen. Eine weitere zusätzliche, in Kombination und/oder als Alternative vorgesehene Möglichkeit, den Wärmeeintrag einzustellen, ist die Wahl der Tiefe T₁, T₂ der umlaufenden Nuten oder Vertiefungen.

Alternativ zu Nuten können auch eine Vielzahl von nebeneinander liegenden Einstichen vorgesehen sein.

Bevorzugt ist es, wenn die erste und die zweite Nut oder erste und zweite Folge von nebeneinander angeordneten Einstichen eine Tiefe T₁, T₂ aufweisen, die größer als die Hälfte der Dicke D₃ des Grundkörpers im Bereich des Flansches oder Vorsprungs ist.

Wenn die Nuten oder die Folge von nebeneinander liegenden Einstichen an gegenüberliegenden Seiten, d.h. Oberflächen des Flansches ausgebildet werden, ist es vorteilhaft, wenn die Tiefen T₁, T₂ der an gegenüberliegenden Flächen des Grundkörpers eingebrachten ersten und zweiten Nut oder Vertiefung so gewählt ist, dass sich die maximalen Tiefen der Nuten und/oder Einstiche im Querschnitt des Grundkörpers überschneiden. Dies bedeutet insbesondere, dass zumindest eine Nut und/oder Folge von Einstichen tiefer als die halbe Dicke des Flansches ist. Dabei ist zumindest eine Nut und/oder Folge von Einstichen im Bereich des Flansches angeordnet. Bevorzugt sind zumindest zwei Nuten und/oder Folgen von Einstichen tiefer als die halbe Dicke des Flansches. Wenn der Grundkörper im Querschnitt betrachtet wird, zeigt sich bei dieser Anordnung, dass dadurch eine federartige Struktur gebildet wird, welche effektiv die beim Verschweißen auf das Glas- und/oder Glaskeramikmaterial wirkenden, durch die thermische Ausdehnung verursachten Kräfte abfängt.

Wie zuvor beschrieben, umfasst der Grundkörper wenigstens zwei Nuten oder Vertiefungen, insbesondere umlaufende Nuten . Die umlaufende Nut ist bevorzugt durchgängig um den Grundkörper umlaufend. Durch die Nut wird eine Entlastung des Grundkörpers bereitgestellt dadurch, dass im Grundkörper das Material gezielt geschwächt wird. Damit sich der Grundkörper orthogonal zur Richtung der Durchführung verformbar und federartig verhalten kann, umfasst der Grundkörper der Erfindung zwei umlaufende Nuten, wobei die erste Nut in eine erste Grundkörperfläche und die zweite Nut in eine zweite Grundkörperfläche eingebracht wird und erste und zweite Grundkörperfläche einander gegenüberliegend sind. Dies hat insbesondere den Vorteil, dass sich bei thermischer Ausdehnung des Materials des Grundkörpers, wie sie bei der Herstellung des Gehäuses beim Laserschweißen auftreten kann, aber auch während des Betriebs des fertigen Bauteils, der Grundköper federförmig, insbesondere ziehharmonikaförmig verformen kann, vorteilhaft reversibel. Durch diese federförmige, insbesondere ziehharmonikaförmige Verformung kann die mechanische Belastung auf das Isolationsmaterial, insbesondere das Glas- und/oder Glaskeramikmaterial, besonders effizient abgefangen werden. Besonders vorteilhaft wird durch diese Form der Verformung aber auch eine Verkippung der Achse des Leiters weitestgehend vermieden.

Statt in Form von Nuten kann als Entlastungseinrichtung auch eine Folge von nebeneinander angeordneten Einstichen vorgesehen sein. Diese Einstiche stellen sozusagen Krater im Material des Grundkörpers dar, in welchen das Material des Grundkörpers geschwächt wird. Insbesondere können die Einstiche kraterförmig, zylinderförmig, pyramidal oder in Form beliebiger Zwischenformen und/oder Kombinationen dieser Formen vorliegen. Alle für Nuten beschriebenen Ausführungsformen und/oder Effekte gelten auch für die Folgen von Einstichen.

Besonders bevorzugt ist es, wenn die erste Nut und die zweite Nut zueinander beabstandet sind und einen Abstand A aufweisen. Bevorzugt liegt der Abstand A im Bereich 0,1 mm zu 1,0 mm, bevorzugt 0,1 mm bis 0,5 mm.

Werden zwei Nuten, die auch generell als Vertiefungen bezeichnet werden können, im Grundkörper vorgesehen, so ist die zweite Nut derart im Grundkörper angeordnet, dass sie zum Schweißbereich beabstandet ist, d.h. bevorzugt liegt sie in dem Bereich des Grundkörpers, in dem der Leiter eingeglast wird, während sich die erste Nut näher am Schweißbereich befindet. Eine hermetische dichte Durchführung in ein Gehäuse wird insbesondere dann zur Verfügung gestellt, wenn alle drei Aspekte der Offenbarung Berücksichtigung finden, d.h. zunächst das Material des Grundkörpers so gewählt wird, dass eine ausreichende Festigkeit zur Verfügung gestellt wird, was sich anhand der Materialauswahl mit einer Streckgrenze in einem gewissen Bereich manifestiert, sodann der Grundkörper mittels Verschweißen mit dem Gehäuse mit bestimmten Materialkombinationen verbunden wird, wobei Rissbildung und durch die erfindungsgemäßen umlaufenden Nuten ein unerwünschter Wärmeeintrag beim Verschweißen vermieden wird.

Weitere Vorteile einer hermetisch dichten Durchführung ergeben sich, wenn die Dicke des Gehäuseteils deutlich dünner ist als die Einglasungslänge im Grundkörper. In einem derartigen Fall kann ein sehr leichtes und dünnes Gehäuse, beispielsweise aus Aluminium, insbesondere Reinstaluminium, realisiert werden. Gleichwohl wird eine ausreichende Einglasungslänge für das Leitermaterial zur Verfügung gestellt. Besonders bevorzugt ist es, wenn das Gehäuseteil eine Dicke D₁ und der Grundkörper eine Dicke D₂ umfasst, wobei die Dicke des Grundkörpers D₂ im Wesentlichen der Einglasungslänge entspricht und für die Dicke D₁ gilt, dass sie im Bereich 20 % bis 80% der Dicke D₂ liegt. Die Dicke D₁ und D₂ wird jeweils im Bereich außerhalb des Flansches bzw. Gegenflansches gemessen.

Bei der Ausgestaltung der Durchführung durch das Gehäuseteil mittels eines zusätzlichen Grundkörpers, in dem der Leiter eingeglast wird, insbesondere der stiftförmige Leiter, ist es möglich, die Durchführung vorzufertigen. Dies bedeutet insbesondere, dass das Stiftmaterial in den Grundkörper eingeglast und anschließend in das Gehäuseteil, insbesondere in eine Batteriezelle, eingebaut wird. Der Grundkörper kann dann auf die jeweilige Herstelltechnologie und Form der Durchführung sowie der Herstelltechnologie und Form des Gehäuseteils optimiert ausgelegt werden. Insbesondere können durch die Vorfertigung wesentlich kleinere Heizeinrichtungen als bei einer Einglasung direkt in das Gehäuseteil verwendet werden, da nicht das gesamte Gehäuseteil, z. B. in einem Ofen erwärmt werden muss, sondern lediglich der Grundkörper mit wesentlich geringeren Abmessungen. Des Weiteren ermöglicht eine derartige Ausgestaltung, bei der eine Vorfertigung der Durchführung aus einem Grundkörper und einem Leiter, insbesondere einem im Wesentlichen stiftförmigen Leiter möglich ist, ein kostengünstiges Einbringen der Durchführung in die Öffnung des Gehäuseteils, beispielsweise in einem einstufigen Prozess, beispielsweise unter Ausnutzung der Kaltverfestigungsmöglichkeiten des Gehäuseteils. Konkret bedeutet dies, dass zunächst in das Gehäuseteil, beispielsweise in den Deckel die Öffnung, z. B. durch Stanzen, eingebracht wird. Das Gehäuse ist kaltverfestigt, da es nicht erhitzt wird. Im Gegensatz hierzu ist der Grundkörper weich, da er beim Einglasen des stiftförmigen Leiters mit einem Glas- oder Glaskeramikmaterial erhitzt wird. Auf diese Art und Weise ist es möglich, ein strukturfestes Batteriezellengehäuse insbesondere im Bereich der Durchführungen herstellen zu können, da im Gegensatz beispielsweise zu einer Direkteinglasung in ein Gehäuseteil kein Verlust der Kaltverfestigung des Gehäuseteils, insbesondere Deckteils, auftritt. Ein weiterer Vorteil ist, dass die Materialstärke des Gehäuseteils gegenüber dem Grundkörper, in den die Einglasung erfolgt deutlich geringer gewählt werden kann. Beispielsweise kann die Materialstärke des Gehäuseteils 1,5 mm und weniger betragen, wohingegen der Grundkörper aus Festigkeitsgründen eine Dicke von 2,0 mm, insbesondere 3,0 mm und mehr umfasst. Die Materialstärke D₁ des Gehäuses beziehungsweise Gehäuseteils liegt bevorzugt zwischen 1 mm und 3 mm, bevorzugt zwischen 1,5 mm und 3 mm,die Dicke des Grundkörpers D₂ zwischen 2 mm und 6 mm, bevorzugt 2,5 mm und 5 mm. Die Dicke des Grundkörpers D₂ wird dabei immer angepasst an die Materialstärke des Gehäuses beziehungsweise Gehäuseteils, insbesondere des Batterie- oder Kondensatordeckels gewählt, in den die Durchführung eingesetzt wird. Bei einer Direkteinglasung wären hingegen unnötig große Materialstärken erforderlich. Die Dicke D₂ entspricht dann der Einglasungslänge EL.

Ein weiterer Vorteil der Ausgestaltung der Durchführung mit einem Grundkörper ist, dass die Materialien für Grundkörper und Gehäuseteil unterschiedlich gewählt werden können, insbesondere in Bezug auf die Materialqualität und die Wahl der Legierung. So wird durch die Verwendung einer Materialkombination Aluminium für das Gehäuseteil, insbesondere Reinstaluminium, in das ein Grundkörper aus einer Aluminiumlegierung mit einem Anteil von Mg und/oder Si und/oder Zr von bevorzugt 2 bis 10 Gew.-% eingebracht wird, eine weitgehend rissfreie Verschweißung erreicht. Die Durchführung kann mit dem Grundkörper im Gehäuseteil hermetisch dicht durch Schweißen, Löten, Einpressen, Einbördeln oder Einschrumpfen verbunden werden. Beim Verbinden der Durchführung mit dem Gehäusebauteil, z. B. durch Schweißen, wird darauf geachtet, dass der Temperatureintrag so niedrig wie möglich ist, um eine Beschädigung des Glas- oder Glaskeramikmaterials zu vermeiden. Hierbei ist es, wie zuvor beschrieben, vorteilhaft, wenn das Material des Grundkörpers eine Aluminiumlegierung mit einem Anteil von Mn und/oder Mg und/oder Si und/oder Zr von bevorzugt 2 bis 10 Gew.-% ist. Hierdurch werden Risse vermieden und hermetische Dichtheit erreicht. Hermetisch dicht bedeutet in dieser Offenbarung, dass die Helium-Leckrate geringer als 1 · 10⁻⁸ mbarl/sec. ist. Gegenüber dem Stand der Technik, bei dem in einem mehrstufigen Prozess eine Kunststoffdichtung für die Durchführung zur Verfügung gestellt werden musste, ist eine hermetisch dichte Verbindung des erfindungsgemäßen Durchführungsbauteils mit dem Gehäuseteil in einem einzigen einfachen Verfahrensschritt herstellbar.

Des Weiteren kann die Auswahl des Grundkörpers auch mit Blick auf das Material des Gehäuseteils erfolgen, sowohl was die Randausführung als auch, was die Materialhärte betrifft und insbesondere auch die Methode zum Verschließen des Gehäuses. Besteht das Gehäuse der Batteriezelle beispielsweise aus Aluminium, insbesondere aus Reinstaluminium, so ist es zur Vermeidung von Rissbildung bevorzugt, wenn als Material für den Grundkörper eine Aluminiumlegierung mit Mn und/oder Mg und/oder Si und/oder Zr gewählt wird.

Des Weiteren ist es möglich, zusätzlich zu den Durchführungen im Gehäuseteil des Gehäuses der Batteriezelle auch noch andere Funktionen einzubringen, beispielsweise ein Sicherheitsventil und/oder eine Batteriefüllöffnung.

Neben der beschriebenen Aluminiumlegierung mit Mg und/oder Si und/oder Zr kann das Gehäuseteil und/oder der Grundkörper, bevorzugt der im Wesentlichen ringförmige Grundkörper, als Material auch ein Metall, insbesondere ein Leichtmetall, wie Titan, eine Titanlegierung, Magnesium, eine Magnesiumlegierung AlSiC, aber auch Stahl, rostfreier Stahl oder Edelstahl umfassen. Als Titanlegierungen können z. B. Ti6246 und/oder Ti6242 verwandt werden. Titan ist ein körperverträgliches Material, so dass es für medizinische Anwendungen, beispielsweise in der Prothetik, zum Einsatz kommt. Ebenso wird es wegen der besonderen Festigkeit, Beständigkeit und geringem Gewicht in besonderen Anwendungen gerne verwendet, beispielsweise in der chemischen Analytik oder Synthese, in Energieerzeugungsanlagen, im Rennsport aber auch für Luft- und Raumfahrtanwendungen.

Für den stiftförmigen Leiter wird insbesondere Kupfer (Cu) oder eine Kupferlegierung verwandt, wenn der stiftförmige Leiter an eine Kathode der elektrochemischen Zelle bzw. Batteriezelle angeschlossen wird und Aluminium (Al) oder eine Aluminiumlegierung, wenn der Leiter, insbesondere der stiftförmige Leiter, an eine Anode angeschlossen wird. Andere Materialien für den stiftförmigen Leiter können Magnesium, eine Magnesiumlegierung, eine Kupferlegierung, CuSiC, AlSiC, NiFe, eine Kupferseele, d. h. ein NiFe-Mantel mit Kupferinnenteil Silber, eine Silberlegierung, Gold, eine Goldlegierung sowie eine Kobalt-Eisen-Legierung sein.

Als Aluminium oder Aluminiumlegierungen kommen auch Aluminiumlegierungen mit einem Mn-Anteil und/oder Mg- und/oder Si- und/oder Zr-Anteil im Bereich 2 bis 10 Gew.-%, insbesondere 3 bis 8 Gew.-%, bevorzugt 4 bis 6 Gew.-% in Betracht. Die Aluminiumlegierung mit Mg und/oder Si und/oder Zr wird insbesondere für den Grundkörper verwandt. Für das Gehäuse wird bevorzugt ein Aluminium ohne diese Elemente eingesetzt. Nachteil beim Aluminium ohne diese Elemente ist, dass das Material beim Erwärmen weich wird, weswegen es für den Grundkörper, in den der Metallstift eingeglast wird, nicht geeignet ist. Durch die Erweichung beim Aufwärmen beim Einglasen kann es vorkommen, dass das Glasmaterial umgebende Metall, insbesondere das Aluminium nicht mehr die notwendige Kompression auf das Glasmaterial aufbringen, um eine dichte Durchführung zur Verfügung zu stellen. Beim Einglasen erfolgt eine Erwärmung auf Temperaturen bevorzugt im Bereich 520° C bis 560° C für einen langen Zeitraum, bevorzugt mehr als 1 Minute bis 60 Minuten.

Mögliche Aluminiumlegierungen, die eine Streckgrenze im Bereich 40 ^{N}/mm² und 150 ^{N}/mm² soweit einen ausreichend hohen Anteil an Schweißförderstoffen umfassen, damit eine Rissbildung sicher vermieden wird, sind in nachfolgender Tabellen 1A und 1B angegeben:

**Tabelle 1A**

| Aluminiumlegierungen für Einglasung und Verschweißbarkeit | | | |
|---|---|---|---|
| Zusatzstoffe | Legierung | 1070A | 3003 |
| | | | |
| | Mg | ≤0,03 | / |
| | Mn | ≤0.03 | 1,0-1,5 |
| | Fe | ≤0,25 | ≤0,7 |
| | Si | ≤0,2 | ≤0,6 |
| | Cu | ≤0,03 | 0,05-0,2 |
| | Zn | ≤0,07 | ≤0,1 |
| | Cr | / | / |
| | Ni | / | / |
| | Ti | 0,03 | / |
| | | | |
| | Young Modul | | |
| | | | |
| kaltverfestigt | Streckgrenze N/mm² | 105 | 185 |
| | Young Modul | 70 | 69,5 |
| | | | |
| getempert | Streckgrenze N/mm² | 15 | 50 |
| | Young Modul | 70 | 69,5 |
| CTE. RT-300°C | | 23,5 | 25,2 |
| Schmelztemperatur | | 659 | 655 |

**Tabelle 1B**

| Aluminiumlegierung für Einglasung | | | | | | | |
|---|---|---|---|---|---|---|---|
| Zusatzstoffe Legierung | 3004 | 4032 | 5049 | 5452 | 5454 | 5754 | 5083 |
| Mg | 0,8-1,3 | 0,8-1,3 | 1,6-2,5 | 2,2-2,8 | 2,4-3,0 | 2,6-3,6 | 4,0-4,9 |
| Mn | 1,0-1,5 | / | 0,5-1,1 | ≤0,1 | 0,5-1,0 | 0,5 | 0,4-1,0 |
| Fe | ≤0,7 | ≤1 | ≤0,5 | ≤0,4 | 0,4 | 0,4 | ≤0,4 |
| Si | ≤0,3 | 11-13,5 | ≤0,4 | ≤0,25 | 0,25 | 0,4 | ≤0,4 |
| Cu | ≤0,25 | 0,5-1,3 | ≤0,1 | ≤0,1 | 0,1 | 0,1 | ≤0,1 |
| Zn | ≤0,25 | ≤0,25 | ≤0,2 | ≤0,1 | 0,25 | 0,2 | ≤0,25 |
| Cr | / | ≤0,1 | | 0,1-0,35 | 0,05-0,2 | 0,3 | 0,05-0,25 |
| Ni | / | 0,5-1,3 | | | | | |
| Ti | / | / | ≤0,1 | | 0,2 | 0,15 | ≤0,15 |
| | | | | | | | |
| Streckengrenze | 230 | 240-340 | 250 | 240 | 250(38) | 230 | 300(H16) |
| Young Modul kaltverfestigt | 70 | 70-80 | 70 | 70 | 70 | 70 | 71 |
| Streckengrenze | 60 | - | 80 | 65 | 85 | 80 | 125 |
| Young Modul getempet | 70 | - | 70 | 70 | 70 | 70 | 71 |
| | | | | | | | |
| CTE RT-300°C | 25,1 | 21 | 23,7 | 25,7 | 23,6 | 23,9 | 23,8 |
| Schmelztemperatur | 629-654 | 530-570 | 620-650 | 607-649 | 602-646 | 610-640 | 640 |

Sämtliche in den Tabellen 1A und 1B ermittelten Werte für die Streckgrenzen wurden durch Zugversuche ermittelt.

Als besonders bevorzugtes Material für den Grundkörper, in den die Einglasung erfolgen kann und der eine Verschweißbarkeit ohne Rissbildung garantiert, wurde von den Erfindern die Aluminiumlegierung 5083 überraschend herausgefunden. Diese zeichnet sich nicht nur durch eine gute Verschweißbarkeit ohne Rißbildung aus, sondern auch dadurch, dass die Legierung nach Erwärmen auf 540° C beim Einglasen über eine ausreichende Festigkeit für eine Druckeinglasung verfügen.

Als Kupfer, insbesondere für den Leiter, kommen in Frage:
Cu-PHC 2.0070
Cu-OF 2.0070
Cu-ETP 2.0065
Cu-HCP 2.0070
Cu-DHP 2.0090.

In vorliegender Offenbarung werden unter Leichtmetallen Metalle verstanden, die ein spezifisches Gewicht geringer als 5,0 kg/dm³ aufweisen. Insbesondere liegt das spezifische Gewicht der Leichtmetalle im Bereich 1,0 kg/dm³ bis 3,0 kg/dm³.

Werden die Leichtmetalle zudem als Materialien für die Leiter, beispielsweise den stiftförmigen Leiter oder das Elektrodenverbindungsbauteil, verwandt, so zeichnen sich die Leichtmetalle des Weiteren noch durch eine spezifische elektrische Leitfähigkeit im Bereich 5 · 10⁶ S/m bis 50 · 10⁶ S/m aus. Bei Einsatz in Druckglasdurchführungen liegt zudem noch der thermische Ausdehnungskoeffizient α für den Bereich 20° C bis 300° C im Bereich 18 · 10⁻⁶/K bis 30 · 10⁻⁶/K.

Im Allgemeinen haben Leichtmetalle Schmelztemperaturen im Bereich 350° C bis 800° C.

Bevorzugt ist der Grundkörper als ringförmiger Grundkörper ausgebildet, bevorzugt in kreisrunder Form, aber auch in ovaler Form. Die ovale Form ist insbesondere dann bevorzugt, wenn das Gehäuseteil, insbesondere das Deckelteil der Batteriezelle, in deren Öffnung(en) die Durchführung eingebracht ist, eine schmale längliche Form aufweist und das Glas- bzw. Glaskeramikmaterial, mit dem der stiftförmige Leiter durch das Gehäuseteil in der Öffnung hindurchgeführt wird, vollständig zwischen dem Grundkörper und dem stiftförmigen Leiter eingebracht ist. Eine derartige Ausgestaltung erlaubt es, die Durchführung, bestehend aus einem im Wesentlichen stiftförmigen Leiter und einem im Wesentlichen ringförmigen Grundkörper, vorzufertigen.

Bevorzugt werden in einer Ausgestaltung als Glas- oder Glaskeramikmaterial derartige Materialien ausgewählt, die eine Verschmelztemperatur aufweisen, die geringer ist als die Schmelztemperatur des Grundkörpers und/oder des im Wesentlichen stiftförmigen Leiters. Besonders bevorzugt sind hier Glas- oder Glaskeramikzusammensetzungen mit niedrigen Verschmelztemperaturen. Eine Zusammensetzung, die derartige Eigenschaften aufweist, umfasst beispielsweise die nachfolgenden Komponenten:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

Insbesondere bevorzugt ist die Zusammensetzung, umfassend die nachfolgenden Komponenten:

| | |
|---|---|
| P₂O₅ | 38-50 mol.-%, insbesondere 39-48 mol.-% |
| Al₂O₃ | 3-14 mol.-%, insbesondere 2-12 mol.-% |
| B₂O₃ | 4-10 mol.-%, insbesondere 4-8 mol.-% |
| Na₂O | 10-30 mol.-%, insbesondere 0-20 mol.-% |
| K₂O | 10-20 mol.-%, insbesondere 12-19 mol.-% |
| PbO | 0-10 mol.-%., insbesondere 0-9 mol.-% |

Die vorher angegebenen Glaszusammensetzungen zeichnen sich nicht nur durch eine niedrige Verschmelztemperatur und ein niedriges Tg aus, sondern auch dadurch, dass sie gegenüber Batterie-Elektrolyten eine ausreichend hohe Beständigkeit aufweisen und insoweit die geforderte Langzeitbeständigkeit gewährleisten. Eine solche Glaszusammensetzung wird besonders vorteilhaft zumindest im Kernbereich der Durchführung eingebracht.

Bei den als bevorzugt angegebenen Glasmaterialien handelt es sich um stabile Phosphatgläser, die einen deutlich niedrigeren Gesamtalkaligehalt als bekannte Alkali-Phosphat-Gläser aufweisen.

Durch die in der Regel hohe Kristallisationsstabilität der Phosphatgläser wird sichergestellt, dass das Aufschmelzen der Gläser auch bei Temperaturen in der Regel < 600° C nicht behindert wird. Dies ermöglicht es, dass die angegebenen Glaszusammensetzungen als Glaslot verwendet werden können, da das Aufschmelzen der Glaszusammensetzungen auch bei Temperaturen in der Regel < 600° C nicht behindert wird.

Die zuvor genannten Glaszusammensetzungen weisen bevorzugt Li auf, das in die Glasstruktur eingebaut ist. Hierdurch eignen sich die Glaszusammensetzungen, insbesondere für Li-Ionen-Speichereinrichtungen, die Elektrolyten basierend auf Li, beispielsweise einer 1 M LiPF₆-Lösung umfassend eine 1:1 Mischung aus Ethylencarbonat und Dimethylcarbonat umfassen.

Besonders bevorzugt sind natriumarme bzw. natriumfreie Glaszusammensetzungen, da die Diffusion der Alkali-Ionen in der Reihenfolge Na+>K+>Cs+ erfolgt und daher natriumarme bzw. natriumfreie Gläser besonders beständig gegenüber Elektrolyten, insbesondere solchen, wie sie in Li-Ionen-Speichereinrichtungen verwandt werden, sind.

Des Weiteren zeigen derartige Glaszusammensetzungen eine thermische Ausdehnung α im Bereich 20° C bis 300° C > 14 · 10⁻⁶/K, insbesondere zwischen 15 · 10⁻⁶/K und 25 · 10⁻⁶/K. Ein weiterer Vorteil der zuvor angegebenen Glaszusammensetzung ist darin zu sehen, dass eine Verschmelzung des Glases mit dem umgebenden Leichtmetall bzw. dem Metall des Leiters, insbesondere in Form eines Metallstiftes, auch unter einer Gasatmosphäre, die keine Schutzgasatmosphäre ist, möglich ist. Auch ein Vakuum ist für Al-Verschmelzungen entgegen den bisherigen Verfahren nicht notwendig. Vielmehr kann eine derartige Verschmelzung auch unter Luft erfolgen. Für beide Arten der Verschmelzungen kann als Schutzgas N₂ oder Ar benutzt werden. Als Vorbehandlung zum Verschmelzen wird das Metall, insbesondere das Leichtmetall gereinigt und/oder geätzt, wenn nötig gezielt oxidiert oder beschichtet. Während des Prozesses werden Temperaturen zwischen 300° C und 600 °C mit Heizraten von 0.1 bis 30 K/min und mit Haltezeiten von 1 bis 60 min verwandt.

Die Verschmelztemperatur kann beispielsweise über die Halbkugeltemperatur wie in R. Görke, K.-J. Leers: Keram. Z. 48 (1996) 300-305, bzw. nach DIN 51730, ISO 540 oder CEN/TS 15404 und 15370-1 beschrieben, bestimmt werden. Die Messung der Halbkugeltemperatur ist ausführlich in der DE 10 2009 011 182 A1 beschrieben. Gemäß der DE 10 2009 011 182 A1 kann die Halbkugeltemperatur in einem mikroskopischen Verfahren mit einem Heiztischmikroskop bestimmt werden. Sie kennzeichnet diejenige Temperatur, bei der ein ursprünglich zylindrischer Probekörper zu einer halbkugelförmigen Masse zusammengeschmolzen ist. Der Halbkugeltemperatur lässt sich eine Viskosität von ungefähr log η = 4,6 dPas zuordnen, wie entsprechender Fachliteratur entnommen werden kann. Wird ein kristallisationsfreies Glas beispielsweise in Form eines Glaspulvers aufgeschmolzen und wieder abgekühlt, so dass es erstarrt, kann es üblicherweise bei der gleichen Schmelztemperatur auch wieder aufgeschmolzen werden. Dies bedeutet für eine Fügeverbindung mit einem kristallisationsfreien Glas, dass die Betriebstemperatur, welcher die Fügeverbindung dauerhaft ausgesetzt sein kann, nicht höher als die Verschmelztemperatur sein darf. Glaszusammensetzungen, wie sie vorliegend eingesetzt werden, werden im Allgemeinen oftmals aus einem Glaspulver hergestellt, das aufgeschmolzen wird und unter Wärmeeinwirkung mit den zu verbindenden Bauteilen die Fügeverbindung ergibt. Die Verschmelztemperatur bzw. Schmelztemperatur entspricht in der Regel etwa der Höhe der so genannten Halbkugeltemperatur des Glases. Gläser mit niedrigen Verschmelztemperaturen bzw. Schmelztemperatur werden auch als Glaslote bezeichnet. Anstelle von Verschmelz- oder Schmelztemperatur wird in einem solchen Fall von Lottemperatur bzw. Löttemperatur geredet. Die Verschmelztemperatur bzw. Lottemperatur kann um ±20 K von der Halbkugeltemperatur abweichen.

Besonders bevorzugt ist es, wenn das Gehäuseteil des Batteriegehäuses beziehungsweise Batteriezellengehäuses eine Außen- und Innenseite aufweist und der Grundkörper der Durchführung mit der Innen- oder Außenseite des Gehäuseteils verbunden wird, insbesondere beispielsweise durch Schweißen.

Hierzu ist bei dem Gehäuseteil vorgesehen, dass der Grundkörper einen Vorsprung, bevorzugt einen Flansch aufweist, der in einen Ausschnitt oder Gegenflansch des Gehäuseteils eingreift. Im Bereich des Ausschnittes oder Gegenflansch kann dann der Grundkörper mit dem Gehäuseteil durch Schweißen verbunden werden.

Der Flansch hat eine Dicke, die an den Mg- und/oder Si- und/oder Zr-Gehalt des Flanschmaterials in der Schweißzone anpassbar ist.

Für die Schweißverbindung zwischen dem Grundkörper und dem Gehäuseteil gibt es mehrere Optionen. Hat das Gehäuseteil keinen Vorsprung, so können Grundkörper und Gehäuseteil durch eine Stumpfstoß-Schweißung miteinander verbunden werden.

Liegt ein Vorsprung vor, so ist es möglich, dass Grundkörper und Gehäuseteil durch eine Überlapp-Schweißung verbunden werden. Im Fall eines Vorsprungs ist es auch möglich, dass sowohl eine Überlapp-Schweißung wie eine Stumpfstoß-Schweißung vorgenommen werden.

Bevorzugt sind die Positionen der Laserschweißbereiche an die Legierungen, insbesondere die Aluminiumlegierungen, die es zu verbinden gilt, anpassbar, insbesondere betrifft dies den Mg- und/oder Si- und/oder Zr-Gehalt und/oder Mn-Gehalt in der Schweißzone. Auch die Schweißtiefe im Grundkörper ist variabel anpassbar, bspw. an den Mg- und/oder Si- und/oder Zr-Gehalt und/oder Mn-Gehalt in der Schweißzone und/oder die Dicke des Vorsprungs. Wie zuvor beschrieben, bestimmt der Mg- und/oder Si- und/oder Zr- und/oder Mn-Gehalt maßgeblich die Rissbildung beim Schweiß- bzw. Verschweißprozess.
Neben dem Gehäuseteil stellt diese Offenbarung auch eine elektrische Einrichtung, insbesondere eine Speichereinrichtung, bevorzugt eine Batteriezelle, zur Verfügung. Alternativ kann die elektrische Einrichtung auch ein Kondensator sein, insbesondere ein Superkondensator. Das Gehäuse umfasst wenigstens ein Gehäuseteil mit wenigstens einer Öffnung und ist dadurch gekennzeichnet, dass die Öffnung des Gehäuseteils eine Durchführung mit wenigstens einem stiftförmigen Leiter, der in einen Grundkörper eingeglast ist, aufnimmt.

Ganz bevorzugt handelt es sich bei der Batteriezelle, für die das Gehäuse zur Verfügung gestellt wird, um eine Batteriezelle für eine Lithium-Ionen-Batterie.

Eine Durchführung in einem Leichtmetall-Gehäuse kann in vielen Bereichen Verwendung finden. Denkbar sind z.B. Leichtmetall-Gehäuse für Batterien oder Kondensatoren oder Superkondensatoren. Durchführungen gemäß der Erfindung können aber auch in der Luft- und Raumfahrttechnik oder Medizintechnik eingesetzt werden. In der Luft- und Raumfahrttechnik betrifft dies vor allem Durchführungen für Leichtbauanwendungen. Ebenso möglich sind Verwendungen in der Medizintechnik, insbesondere in der Prothetik und/oder für Implantate.

Des Weiteren stellt die Offenbarung ein Verfahren zum Herstellen einer Durchführung mit wenigstens einem im Wesentlichen stiftförmigen Leiter zur Verfügung, wobei das Verfahren die folgenden Schritte umfasst:
- es wird ein Leiter, insbesondere ein im Wesentlichen stiftförmiger Leiter und ein Grundkörper zur Verfügung gestellt
- der Leiter, insbesondere der im Wesentlichen stiftförmige Leiter wird in einem Glas- oder Glaskeramikmaterial in den Grundkörper eingeglast
- der Grundkörper wird mit einem Teil des Gehäuses, insbesondere des Vorsprunges, bevorzugt des Flansches, mit einem Ausschnitt des Gehäuseteiles durch Laserschweißen verbunden.

Bevorzugt wird der Grundkörper im Bereich des Vorsprunges, bevorzugt des Flansches vor dem Laserschweißen, bevorzugt mit einer Haltevorrichtung in den Ausschnitt oder den Gegenflansch des Gehäuseteiles gedrückt, um einen Spalt zwischen dem Grundkörper und dem Gehäuseteil zu vermeiden.

Besonders bevorzugt ist es, dass das Laserstrahlschweißen durch das Gehäuseteil in den Grundkörper erfolgt.

Die Erfindung soll nachfolgend anhand der Ausführungsbeispiele und der Zeichnungen ohne Beschränkung hierauf näher beschrieben werden.

Es zeigen:
- Fig. 1a-1d: Detailansichten des Grundkörpers;
- Fig. 2: eine erste Ausgestaltung eines erfindungsgemäßen Gehäuseteiles mit einem Metallstift und einem Grundkörper, wobei der Grundkörper in einen Ausschnitt des Gehäuseteiles eingebracht ist;
- Fig. 3: eine Detailansicht der Verbindung Grundkörper/Gehäuseteil;
- Fig. 4: eine Detailansicht der Verbindung Grundkörper/Gehäuseteil, wobei Grundkörper und Gehäuseteil durch Stumpfstoß-Schweißung verbunden sind;
- Fig. 5: eine Detailansicht der Verbindung Grundkörper/Gehäuseteil, wobei Grundkörper und Gehäuseteil durch Überlapp-Schweißung verbunden sind.
- Fig. 6: eine weitere Detailansicht der Verbindung Grundkörper/Gehäuseteil, wobei Grundkörper und Gehäuseteil sowohl durch eine Stumpfstoß-Schweißung wie auch eine Überlapp-Schweißung verbunden sind.
- Fig. 7: eine alternative Ausgestaltung eines Gehäuseteils mit einem Metallstift und einem Grundkörper, wobei der Grundkörper in einen Ausschnitt des Gehäuses eingebracht wird.

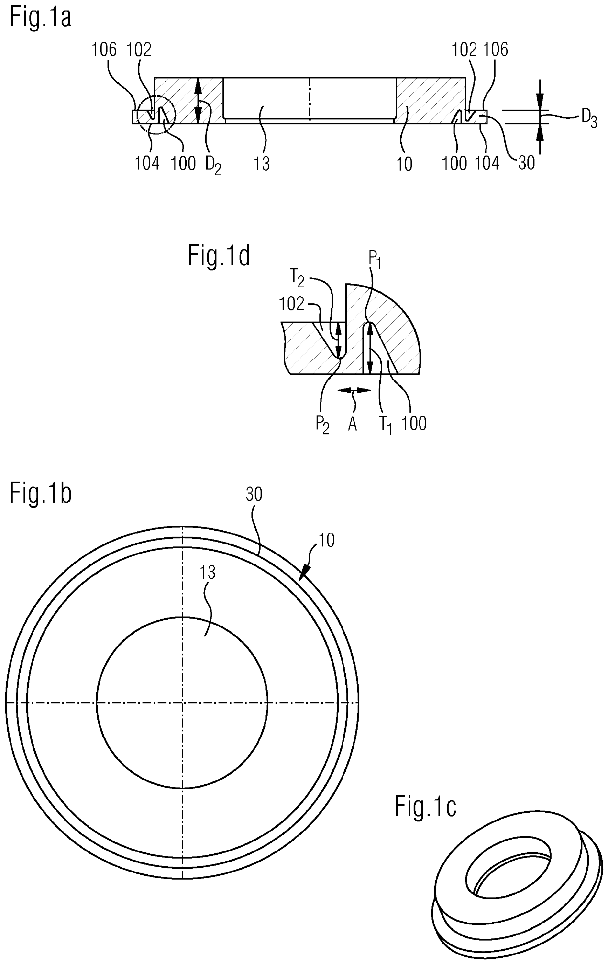

In Figur 1a-1d ist eine Ausführungsform eines durch einen Stanzprozess erhaltenen Grundkörpers zur Aufnahme des Metallstiftes in einem Glas- oder Glaskeramikmaterial gezeigt, der als Ring ausgebildet ist. Der Grundkörper 10 ist im Schnitt in Fig. 1a, in der Draufsicht in Fig. 1b und in 3-dimensionaler Ansicht in Fig. 1c gezeigt. Der Grundkörper umfasst eine Öffnung 13, durch die der Leiter in einem Glasmaterial oder Glaskeramikmaterial hindurchgeführt wird. Die Öffnung 13 kann in den Grundkörper bevorzugt durch Stanzen eingebracht sein. Des Weiteren umfasst der Grundkörper 10 Flansche bzw. Vorsprünge 30, die mit einem Ausschnitt bzw. Gegenflansch eines Gehäuseteils zur Anlage kommen können. Unter einem Flansch wird in vorliegendem Fall insbesondere eine ringförmige Verbreiterung des Grundkörpers mit geringerer Dicke verstanden. Der Flansch ist der Teil des Grundkörpers zum Verbinden mit anderen Teilen, hier dem Grundkörper. Der Flansch 30 stellt somit ein Verbindungselement dar. Aufgabe des Flansches ist unter anderem die Positionierung der zu verbindenden Teile zueinander. Des Weiteren dient der Flansch des Grundkörpers dazu, den Grundkörper über einen Gegenflansch mit dem Gehäuse zu verbinden. Gut zu erkennen sind die beiden umlaufenden Nuten oder Folgen von Einstichen 100, 102, die in den Grundkörper eingebracht sind, um die beschriebene Flexibilität und thermische Entkopplung zur Verfügung stellen.

Insbesondere Fig. 1d zeigt im Detail die beiden umlaufenden Nuten 100, 102. Die beiden Nuten 100, 102 werden an gegenüberliegenden Grundkörperflächen 104,106 bevorzugt im Bereich des Vorsprungs oder Flansches 30 des Grundkörpers 10 ausgebildet. Die Nuten haben unterschiedliche Tiefen T₁, T₂. Der Nut 100 ist die Tiefe T₁, der Nut 102 die Tiefe T₂ zugeordnet. Die Tiefe T₁ ist im vorliegenden Ausführungsbeispiel ohne Beschränkung hierauf größer als T₂. Die Ebene des tiefsten Punktes P₁ der Nut 100 liegt in einem Abstand A zum obersten Punkt P₂ der Nut 102. Der Abstand A, der den Abstand zwischen der Nut 100 und der Nut 102 bezeichnet, beträgt beispielsweise 0,1 bis 1 mm, bevorzugt 0,1 bis 0,5 mm, Die Tiefe T₁ der Nut 100 liegt beispielsweise bei 0,1 bis 4 mm, bevorzugt 1 mm bis 3 mm, die Tiefe T₂ der Nut beträgt insbesondere 0,1 bis 4 mm, bevorzugt 1 mm bis 2 mm.

Die erste Nut 100 wird im gezeigten Beispiel im Bereich des Vorsprunges oder Flansches 30 ausgebildet, die zweite Nut 102 im Grundkörper selbst. Der Abstand A zwischen erster Nut 100 und zweiter Nut 102 beträgt, wie zuvor bemerkt, bevorzugt 0,1 mm bis 1,0 mm, bevorzugt 0,1 mm bis 0,5 mm.

Der Grundkörper weist eine Dicke D₂ auf, die im Wesentlichen der Einglasungslänge EL entspricht. Der Vorsprung oder Flansch 30 des Grundkörpers weist eine Dicke D₃ auf, die geringer als die Dicke D₂ des Grundkörpers ist. Bevorzugt ist D₃ nur 10 % bis 50 %, bevorzugt 20 % bis 40 % der Dicke D₂. Bevorzugt liegt die Dicke D₂ im Bereich 3 mm bis 7 mm, bevorzugt 4 mm bis 6 mm. Die Dicke D₃ beträgt 0,5 mm bis 2,5mm, bevorzugt 1,0 mm bis 2,0 mm. Der Durchmesser D des Grundkörpers beträgt 30 bis 40 mm, die Länge des Flansches 30 liegt zwischen 0,5 mm und 5 mm.

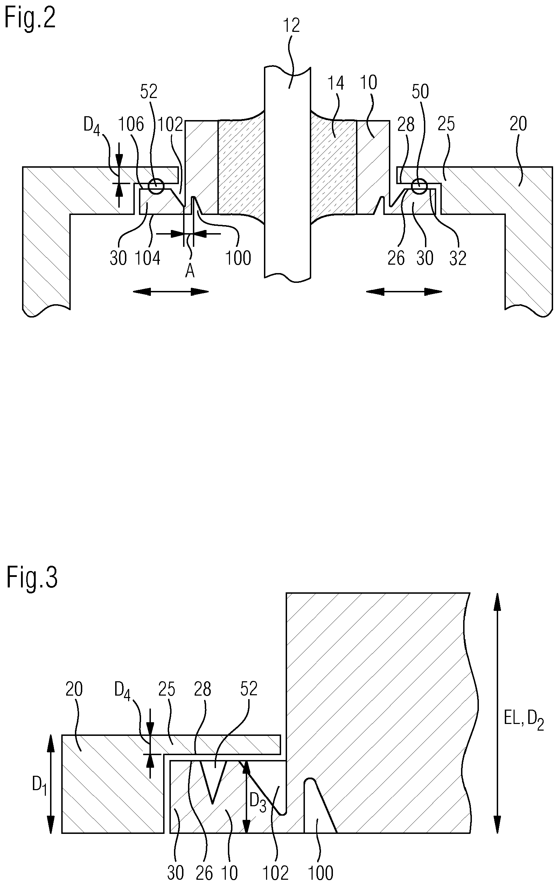

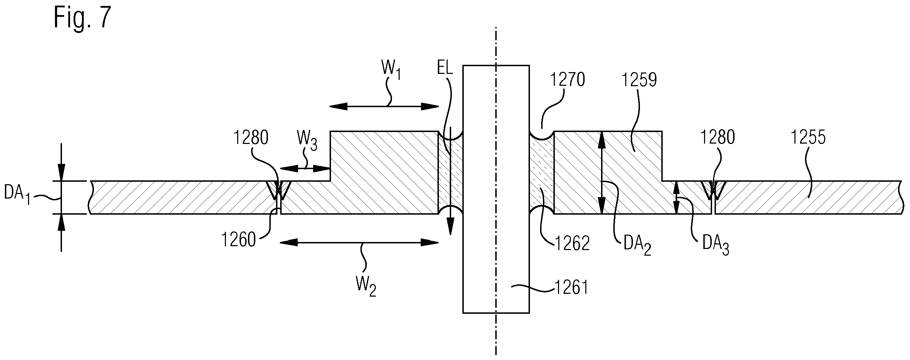

In die Öffnung 13 wird in einem Glas- oder Glaskeramikmaterial ein Leiter, bevorzugt ein stiftförmiger Leiter, eingeglast. Dies ist lediglich in Fig. 2 und Fig. 7 gezeigt. Die in Fig. 2 und 7 gezeigte Einglasung eines Leiters in einem Glas- oder Glaskeramikmaterial in die Öffnung 13 kann von einem Fachmann ohne Weiteres auf die anderen Ausführungsformen gemäß Fig. 1a-6 übertragen werden. Besonders bevorzugt ist es, wenn der thermische Ausdehnungskoeffizient von Grundkörper und Glas- oder Glaskeramikmaterial unterschiedliche ist. Der thermische Ausdehnungskoeffizient des Grundkörpers liegt im Bereich 18 · 10⁻⁶/K bis 30 · 10⁻⁶/K, derjenige des Glas- oder Glaskeramikmaterials zwischen 15 · 10⁻⁶/K bis 25 · 10⁻⁶/K. Ist der thermische Ausdehnungskoeffizient des Materials des Grundkörpers größer als der des Glas- oder Glaskeramikmaterials, so liegt eine Druckeinglasung vor.

Figur 2 und 3 zeigen eine Ausgestaltung der Erfindung, bei der ein Grundkörper 10 mit einem Metallstift 12, der im Grundkörper 10 in einem Glas- oder Glaskeramikmaterial 14 eingeglast ist, in ein Gehäuseteil 20 eingebracht wurde. Hierbei zeigt Fig. 2 das gesamte Gehäuseteil mit dem Grundkörper, Fig. 3 die Verbindung von Grundkörper und Gehäuseteil im Detail. Bei der Einglasung handelt es sich um eine sogenannte Druckeinglasung. Eine Druckeinglasung wird dann erhalten, wenn der thermische Ausdehnungskoeffizient von Glas- oder Glaskeramikmaterial und umgebenden Metall des Grundkörpers unterschiedlich sind. Insbesondere entsteht eine Druckeinglasung, wenn der thermische Ausdehnungskoeffizient des Grundkörpers größer ist als derjenige des Glas- und/oder Glaskeramikmaterials in der Durchführungsöffnung des Grundkörpers. Eine Druckeinglasung stellt eine thermisch dichte Einglasung mit einer Heliumleckrate geringer als 10⁻⁸ mbar l/sec bei einem Druckunterschied von 1 bar zur Verfügung. Der Grundkörper 10 ist in einen Teil des Gehäuses 20 eingesetzt und mit dem Gehäuse fest verbunden, beispielsweise durch eine Schweißverbindung, insbesondere eine Laserschweißverbindung, erzeugt durch ein Laserschweißverfahren. Um beim Verschweißen von Grundkörper 10 und Gehäuse 20 eine Rissbildung zu vermeiden, ist es vorteilhaft, wenn Grundkörper und Gehäuse unterschiedliche Materialien umfassen. Bevorzugt besteht das Gehäuse aus Aluminium, insbesondere Rein- bzw. Reinstaluminium und der Grundkörper aus einer Aluminiumlegierung mit Mg, Mn, Si, Zr, wobei der Anteil an Mg, Mn, Si, Zr bevorzugt im Bereich 2 bis 10 Gew.-% liegt. Das Gehäuseteil verfügt über einen Gegenflansch 25, in den der Vorsprung oder Flansch 30 des Grundkörpers eingebracht wird. Der Bereich 25 wird auch als Gegenflansch zum Flansch 30 des Grundkörpers bezeichnet. Die Oberfläche 32 des Vorsprunges oder Flansches 30 liegt dann gegenüber der Oberfläche 28 des Gegenflansches 25 des Gehäuseteils. Die beiden gegenüberliegenden Oberflächen 26 und 28 des Flansches des Grundkörpers sowie des Gegenflansches des Gehäuseteils werden mit einem geringen Spalt zur Anlage gebracht und der Grundkörper mit dem Gehäuseteil im Bereich der gegenüberliegenden Oberflächen von Flansch und Gegenflansch mit einem Laserschweißverfahren mit einem oder mehreren Schweißpunkten 50 verbunden. Diese Art der Verbindung wird auch als Überlappschweißen bezeichnet. Das Laserschweißen erfolgt hier durch das Gehäuseteil im Bereich 52 in den Grundkörper 30 hinein. Beim ÜberlappSchweißen kann die Tiefe der Schweißung variabel angepasst werden, und zwar sowohl an das Material und bei einer Aluminiumlegierung beispielsweise den Mg- und/oder Si- und/oder Zr-Gehalt und/oder Mn-Gehalt des Materials wie auch die Dicke des Vorsprungs. Aufgrund der Tatsache, dass es sich bei den Seiten 26, 28 des Vorsprunges bzw. Flansches 30 und des Gegenflansches 25 um gegenüberliegende Seiten handelt, ist ein Laserschweißen mit einem sehr geringen Spaltmaß möglich. Hierdurch wird eine geringere Laserenergie als bei einer Stumpfstoßverbindung benötigt und auch eine schmälere Lasernaht als bei einer Stumpfstoßverbindung, wie beispielsweise in der WO 2012/110242 A4 offenbart, möglich. Andererseits können Grundkörper und Gehäuse auch durch Stumpfstoßschweißen verbunden werden, insbesondere in Fällen, in denen der Grundkörper keinen Vorsprung bzw. Flansch aufweist. Weist der Grundkörper aber einen Flansch auf, so wird die Dicke des Ausschnittes oder Gegenflansch in das Gehäuseteil so gewählt, dass die Dicke D₄ des Gehäuseteils im Bereich des Gegenflansches deutlich dünner ist als die Dicke D₂ des gesamten Gehäuseteils und eine optimale Schweißdicke für den Laserschweißprozess zur Verfügung gestellt wird. Während die Dicke D₁ des Gehäusebauteiles aus Gewichtsgründen minimiert wird und ungefähr 1,5 mm beträgt, muss der Grundkörper im Bereich der Einglasung mindestens die Einglasungslänge EL zur Verfügung stellen. Die Einglasungslänge EL liegt im Berich 3 mm bis 7mm.

Der Grundkörper 10, in dem der Leiter 12 in einem Glas- oder Glaskeramikmaterial 14 eingeglast wird, wird bevorzugt als Stanzteil aus einem Aluminiumring hergestellt. Im Fertigungsverlauf wird zunächst der Grundkörper 10 ausgestanzt, sodann erfolgt die Einglasung, insbesondere die Druckeinglasung des Leiters 12. Danach wird der Grundkörper mit Vorsprung oder Flansch in den Ausschnitt oder Gegenflansch des Gehäuseteils gedrückt, um einen Spalt der durch Laserschweißen zu verbindenden Teile zu vermeiden. Nachdem der Vorsprung im Bereich des Ausschnittes fest aneinandergedrückt erfolgt ist, erfolgt das Laserschweißen durch die Dicke D₄ des Gehäuseteils bzw. Gegenflansches hindurch.

Der Grundkörper verfügt des Weiteren über zwei umlaufende Nuten 100 und 102, die auch als Einstiche bezeichnet werden. Die Nuten bzw. Einstiche in den Grundkörper sind entfernt zu der Stelle angeordnet, in der die Verschweißung des Grundkörpers mit dem Gehäuseteil erfolgt.

Durch die beiden Nuten 100, 102, die bevorzugt als umlaufende Nuten ausgebildet sind, wird erreicht, dass eine Elastizität zur Verfügung gestellt wird, um die Durchführung, insbesondere im Bereich der Einglasung, zu schützen bzw. zu entlasten. Des Weiteren stellen die Einstiche bzw. umlaufende Nut eine thermische Barriere dar, die verhindert, dass ein Wärmeeintrag beim Einglasen im Bereich der durch eine Schweißverbindung zu verbindenden Stellen verhindert wird.

Besonders bevorzugt ist die Ausgestaltung, wie dargestellt, mit zwei umlaufenden Nuten, nämlich einer umlaufenden Nut 100, die in die erste Grundkörperfläche 104 eingebracht ist und einer zweiten umlaufenden Nut 102, die in die zweite Grundkörperfläche 106 eingebracht ist, wobei die erste Grundkörperfläche 104 und die zwei Grundkörperfläche 106 im Bereich des Vorsprunges einander gegenüberliegend sind. Bevorzugt beträgt der Abstand A zwischen den beiden Nuten 100 und 102 0,1 bis 1,0 mm, insbesondere 0,1 bis 0,5 mm.

Die beiden Nuten ermöglichen es, dass der Grundkörper federförmig ausgebildet, d.h. orthogonal zur Richtung der Durchführung verformbar ist. Insbesondere können so beim Laserschweißen eingebrachte Spannungen vermieden werden, die sonst in der Einglasung zu Rissen und zum Bruch führen Dies wird insbesondere dadurch verhindert, dass durch den Abstand A der Nuten ein Wärmeeintrag stattfindet.

Ein weiterer Vorteil der Ausführung mit zwei umlaufenden Nuten ist, dass auch im Betrieb beim Aufheizen das Bauteil Spannungen aufnehmen kann und nicht in die Glasdurchführung weiterleitet. Wie ausgeführt, ist der Bereich, in dem das Laserverschweißen des Grundkörpers mit dem Gehäuseteil stattfindet, entfernt von den beiden umlaufenden Nuten.

Als Material für die Einglasung kommt ein Glas- oder Glaskeramikmaterial in Betracht, das die nachfolgenden Komponenten in mol-% umfasst:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

Diese Glaszusammensetzungen zeichnen sich nicht nur durch eine niedrige Verschmelztemperatur und ein niedriges Tg aus, sondern auch dadurch, dass sie eine ausreichend hohe Beständigkeit, beispielsweise gegenüber Batterie-Elektrolyten, aufweisen, ebenso wie eine hohe Langzeitbeständigkeit.

In den Figuren 2 und 3 sind detaillierte Darstellungen der Verbindung des Werkstückes 10 mit dem Gehäuseteil 20 gezeigt und wie ein Grundkörper aufgebaut ist, in den die Einglasung vorgenommen wird. Figur 2 zeigt nochmals detailliert die Verbindung des Grundkörpers 10 mit dem Gehäuseteil 20, wobei in der in Fig. 2 gezeigten Ausgestaltung der Grundkörper einen Vorsprung 30 aufweist.. Gleiche Bauteile wie in Figur 2 sind mit denselben Bezugsziffern belegt. Der Grundkörper 10, in den im Bereich der Öffnung die Einglasung erfolgt, verfügt über eine Dicke D₂, die der Einglasungslänge EL entspricht. Die Dicke D₂ des Grundkörpers ist wesentlich größer wie die Dicke D₁ des Gehäuseteils. Generell ist die Dicke D₁ im Bereich 20 % bis 80 % der Dicke D_{2.} Gut zu erkennen in Figur 2 ist der im Gehäuseteil gebildete Abschnitt 25 oder Gegenflansch 25 mit der Fläche 28, wobei an der Fläche 28 die Fläche 26 des Vorsprunges oder Flansches 30 des Grundkörpers 10 anliegt. Im Bereich der Flächen 28 und 26 können Grundkörper und Gehäuseteil miteinander durch Überlappschweißen verschweißt werden. Der Grundkörper umfasst zwei umlaufende Nuten 100, 102, wobei die Nuten 100, 102 auf gegenüberliegende Seiten des Grundkörpers, insbesondere im Bereich des Flansches, ausgebildet werden. Des Weiteren sind die Nuten selbst zueinander beabstandet. Die Nuten 100, 102 stellen eine Verformbarkeit orthogonal zur Richtung der Durchführung zur Verfügung und eine gewisse elastische Wirkung des Grundkörpers Die Dicke D₃ bezeichnet die Dicke des Flansches des Grundkörpers, die Dicke D4 die Dicke des Gegenflansches des Gehäuses.

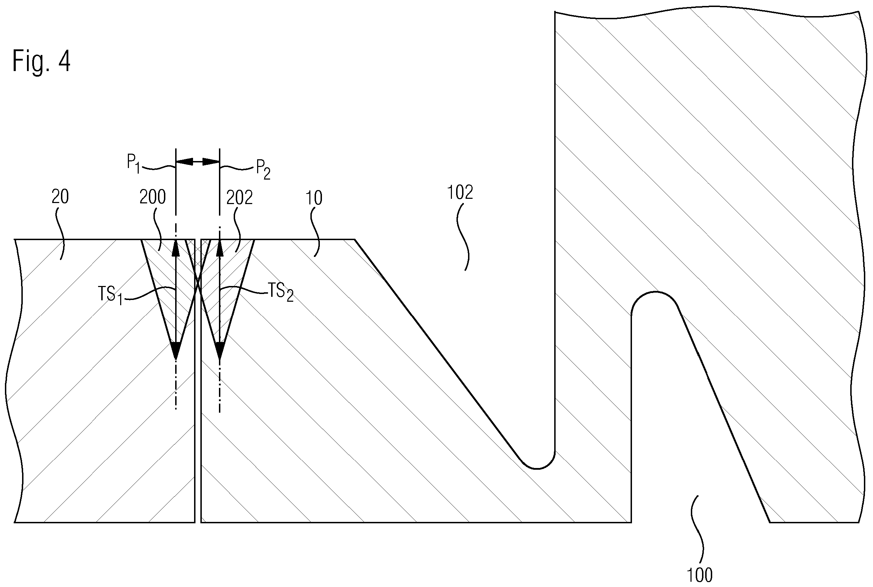

In den Figuren 4 bis 6 sind unterschiedliche Arten der Verbindung von Grundkörper und Gehäuseteil gezeigt.

Figur 4 zeigt die Verbindung eines Grundkörpers 10, der mit einem Gehäuseteil 20 durch Stumpfschweißen verbunden ist. Gleiche Bauteile wie in den Figuren 1 bis 3 sind mit denselben Bezugsziffern belegt. Erfindungsgemäß weist der Grundkörper 10 zwei Nuten 100 und 102 auf, die auch bereits in den Figuren 1 bis 3 gezeigt sind. Im Gegensatz zu den Ausführungsformen in den Figuren 1 bis 3 weist der Grundkörper keinen Flansch oder Vorsprung auf, weswegen Grundkörper 10 und Gehäuseteil 20 nur durch eine Stumpfstoßschweißung miteinander verbunden werden können. Für die Stumpfstoßschweißung sind zwei mögliche Schweißbereiche dargestellt, die mit den Bezugsziffern 200 und 202 bezeichnet sind. Der Schweißbereich 202 liegt im Grundkörper 10, der Schweißbereich 200 im Bereich des Gehäuseteiles, beispielsweise des Deckels 20. Die Schweißbereiche 200, 202 können in ihrer Positionen P₁, P₂ an die Materialzusammensetzungen des Grundkörpers 10 bzw. des Gehäuseteils 20 angepasst werden. Insbesondere ist es möglich, die Positionen P₁, P₂ an den Mg- und/oder Si- und/oder Zr-Gehalt und/oder Mn-Gehalt der Aluminiumlegierung des Grundkörpers 10 anzupassen. Neben den Positionen P₁, P₂ ist jeder Schweißbereich auch durch Tiefen TS₁ und TS₂ charakterisiert. Auch die Tiefen TS₁ und TS₂ können an die unterschiedlichen Materialien angepasst werden, insbesondere an die unterschiedlichen Aluminiumlegierungen von Grundkörper und Gehäuseteil.

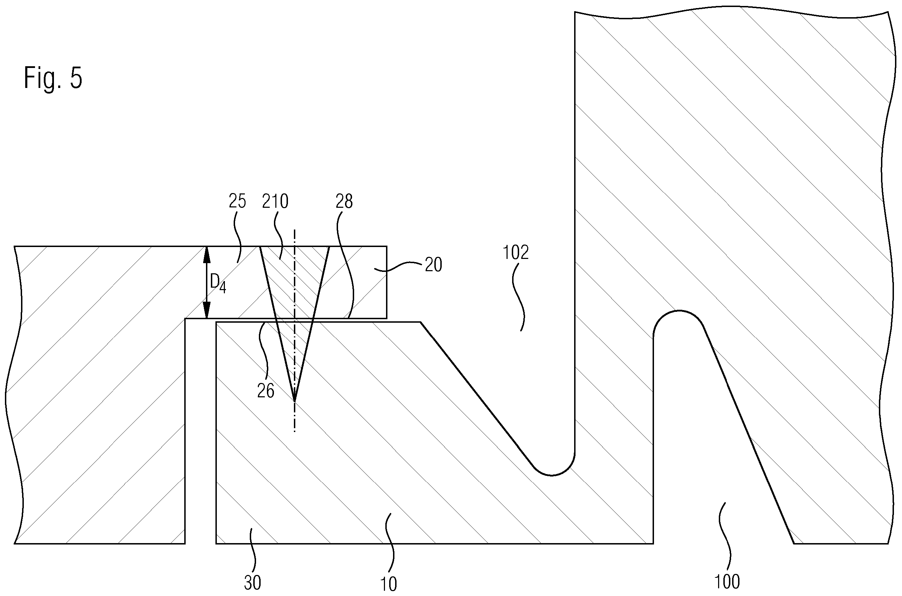

Figur 5 zeigt eine alternative Ausgestaltung einer Verbindung von Grundkörper 10 und Gehäuseteil 20, wobei vorliegend der Grundkörper 10 einen Flansch 30 umfasst. Das Gehäuse weist einen Gegenflansch 25 auf. Die Flächen 28 des Gegenflansches 25 und 26 des Flansches 30 liegen einander gegenüber. Des Weiteren sind das Gehäuseteil 20 und der Grundkörper 10 durch Überlappschweißen miteinander verbunden. Beim Überlappschweißen gibt es nur einen Schweißbereich 210. Die Dicke des Gegenflansches 25 ist mit D₄ bezeichnet. Beim Überlappschweißen erfolgt das Schweißen, wie dargestellt, durch die Dicke D₄ des Gegenflansches hindurch. Die Dicke D₄ des Gegenflansches wird an das Material, insbesondere den Mg-Gehalt im Material des Gegenflansches angepasst. Bei den Materialien des Gehäuseteils 20 handelt es sich bevorzugt um Aluminium bzw. eine Aluminiumlegierung. Die beiden Nuten 100, 102 sind in den Grundkörper eingelassen, wie in Fig.1 bis 3 beschrieben.

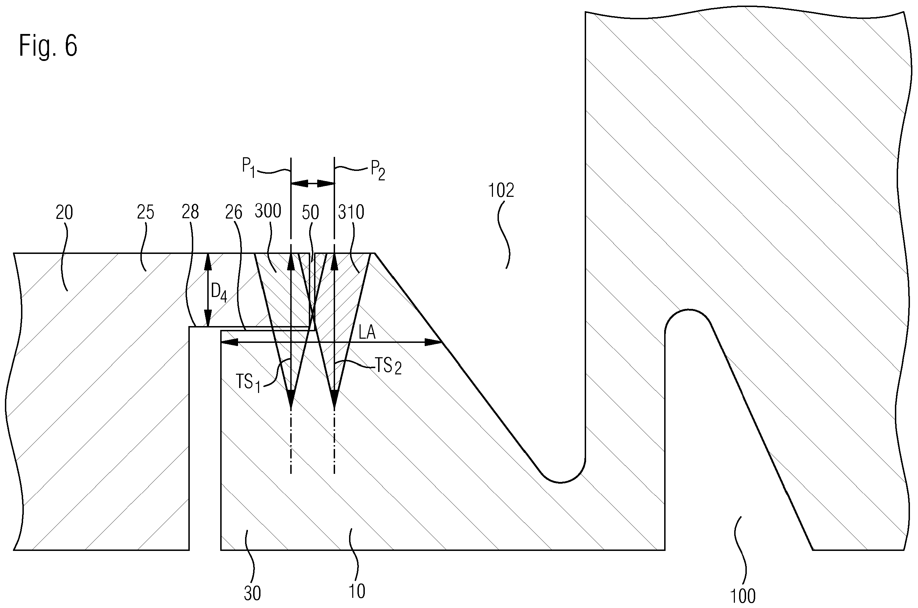

Figur 6 zeigt eine alternative Ausgestaltung einer Verbindung von Grundkörper 10 und Gehäuseteil 20. Wiederum weist der Grundkörper 10 einen Flansch 30 und das Gehäuseteil 20 einen Gegenflansch 25 auf. Allerdings überlappt im Gegensatz zu Fig. 5 der Gegenflansch 25 nicht vollständig die gesamte Länge LA des Grundkörpers. Das führt dazu, dass der Grundkörper 10 im Bereich 50 stumpf dem Gegenflansch 25 mit einer Fläche gegenüber liegt. Daher bildet eine solche Konfiguration die Möglichkeit, Grundkörper 10 und Gehäuseteil 20 nicht nur durch Überlappschweißen 300 in dem Bereich, in dem sich Flansch und Gegenflansch gegenüber liegen, zu verbinden, sondern auch durch eine Stumpfstoßschweißung 310. Die Positionen P₁ und P₂ des unterschiedlichen Schweißbereichs für die Überlappschweißung 300 wie für die Stumpfstoßschweißung 310 lassen sich an die Materialien in der Schweißzone anpassen, ebenso wie die Tiefen TS1 und TS₂ der Schweißbereiche. Des Weiteren sind Nuten 100, 102 in den Grundkörper eingelassen.

Figur 7 zeigt eine alternative Ausführungsform eines Gehäuseteils 1255, das einen Grundkörper 1259 aufnimmt. Grundkörper und Gehäuseteil sind miteinander verbunden, insbesondere verschweißt. Die Materialien von Grundkörper und Gehäuseteil können als Leichtmetall, bzw. als Leichtmetalllegierung gewählt werden. Optional ist es auch möglich, Entlastungsnuten bei der Ausgestaltung gemäß Figur 7, obwohl nicht dargestellt, vorzusehen. Das Gehäuseteil 1255 hat eine erste Höhe oder Dicke DA₁. Der Grundkörper 1259 hat eine zweite Dicke, DA₂ und eine dritte Dicke DA₃. Die zweite Dicke DA₂ bezeichnet die Dicke des Grundkörpers und entspricht der Einglasungslänge EL, wohingegen die Dicke DA₃, die Dicke des Grundkörpers in dem Bereich ist, in dem der Grundkörper an das Gehäusebauteil stößt. Die Dicke DA₃ korrespondiert zur Dicke DA₁ des Gehäusebauteils. Wenn die Dicke DA₁ des Gehäusebauteils zur Dicke DA₃ korrespondiert, so sind Grundkörper und Gehäusebauteil aufeinander ausgerichtet. Hierdurch ist es möglich, mehr Raum für Elektronik oder Verbindungen im Gehäuse zur Verfügung zu stellen.

Des Weiteren wird durch die gleiche Dicke sichergestellt, dass eine Löt- und/oder Schweißverbindung des Gehäuseteils mit dem Grundkörper verbessert wird. Dies ist insbesondere darauf zurückzuführen, dass nicht zwei Teile unterschiedlicher Dicke an ihren Ecken miteinander verbunden würden, sondern zwei Teile, nämlich das Gehäuseteil und der Grundkörper, mit im Wesentlichen gleicher Dicke. Dies hat den Vorteil, dass beim Laserschweißen die Schweißlinie nicht im Bereich der Kanten von Teilen unterschiedlicher Dicke platziert werden muss, so dass der Laserschweißprozess effektiver wird.

Die Dicke DA₂ des Grundkörpers 1259 korrespondiert zur Einglasungslänge EL des Glasmaterials 1262 in der Öffnung 1270 des Grundkörpers 1259. Durch die Öffnung 1270 des Grundkörpers 1259 wird ein Leiter, insbesondere ein Stiftleiter 1261 geführt. Der Leiter 1261 ist in einem Glas- oder Glaskeramikmaterial 1262 mit einer Einglasungslänge EL eingeglast. Die Dicke DA₂ des Grundkörpers in der Mitte der Einglasungslänge wird so gewählt, dass eine Druckdichtung zur Verfügung gestellt wird, das bedeutet der Grundkörper 1259 übt eine Druckkraft auf das Glas- oder Glaskeramikmaterial 1262 entlang der Einglasungslänge EL aus. Es handelt sich somit um eine Druckeinglasung, wie zuvor beschrieben. Da die Dicke DA₃ des Grundkörpers wesentlich geringer ist als die Dicke DA₂ ist, können thermischer und mechanischer Stress, der durch das Verschweißen auftritt, reduziert werden. Durch entsprechende Wahl von DA₂ und DA₃ können zum einen die durch den unterschiedlichen thermischen Ausdehnungskoeffizienten bedingten Druckkräfte auf das Glas- oder Glaskeramikmaterial eingestellt werden, wie auch thermische und mechanische Beanspruchung, die durch den Laserschweißprozess bedingt sind, ausbalanciert werden.

Der Grundkörper 1259 mit einem Flansch 1260 kann durch Kaltumformung oder als gestufte Bohrung hergestellt werden. Die Dicke DA₃ des Flansches beträgt zwischen 10 und 80 %, bevorzugt zwischen 30 und 70 % der Dicke DA₂ des Grundkörpers 1259. Die Dicke DA₂ kann zwischen 3 mm und 8 mm, bevorzugt 4 mm bis 6 mm und die Dicke DA₃ zwischen 0,5 mm und 3 mm, bevorzugt 1 mm und 3 mm, gewählt werden. Neben einer Verbindung des Flansches 1260 mit Grundkörper 1259 durch Laserschweißen wäre auch noch ein Einpressen oder ein Aufschrumpfen auf das Gehäuse 1255 im Bereich 1280 denkbar. Wird das Laserschweißen als Verbindungsprozess angewandt, so wird eine hermetisch dichte Verbindung mit einer Helium-Leckrate von geringer 1·10⁻⁸ mbarl/sec erreicht.

Mit der Erfindung wird erstmals eine Durchführung und ein Gehäuseteil eines Gehäuses, insbesondere eines Batteriegehäuses, zur Verfügung gestellt, wobei die Durchführung einen Grundkörper umfasst sowie einen im Grundkörper eingeglasten Leiter. Die so ausgebildete Durchführung zeichnet sich durch eine besonders einfache Herstellbarkeit aus und eine hohe Flexibilität, da aufgrund der Nuten der Grundkörper federförmig komprimierbar ausgebildet ist, was Spannungen von der Einglasung, insbesondere beim Schweißen, nimmt. Des Weiteren ist es möglich, durch Wahl der Materialien für Grundkörper und Gehäuseteil, Grundkörper und Gehäuseteil ohne Rissbildung miteinander zu verbinden.

## Patentansprüche

1. Einheit aus Grundkörper mit eingeglastem Leiter, umfassend einen Grundkörper (10) mit wenigstens einer Öffnung (13), wenigstens einen Leiter (12, 1261), insbesondere einen im Wesentlichen stiftförmigen Leiter (12, 1261), und ein Glas- oder Glaskeramikmaterial (14, 1262), wobei der wenigstens eine Leiter (12, 1261) in dem Glas- oder Glaskeramikmaterial (14, 1262) durch die Öffnung (13) des Grundkörpers (10) hindurchgeführt ist und darin eingeglast ist,
**dadurch gekennzeichnet, dass**
der Grundkörper (10) mindestens zwei umlaufende Nuten (100, 102) und/oder Vertiefungen mit einem Abstand A zueinander aufweist, wobei eine erste Nut (100) und/oder Vertiefung in einer erste Grundkörperfläche (104) und in einer gegenüberliegenden zweiten Grundkörperfläche (106) eine zweite Nut (102) und/oder Vertiefung angeordnet ist, wodurch eine thermische Barriere zur Verfügung gestellt ist und der Grundkörper (10) bei einer mechanischen Belastung in Richtung senkrecht zur Achse des Leiters (12) federförmig, insbesondere ziehharmonikaförmig, verformbar ausgebildet ist.

2. Einheit nach Anspruch 1,
**dadurch gekennzeichnet, dass**
bei der mechanischen Belastung des Grundkörpers (10) in Richtung senkrecht zur Achse des Stifts (12) die Achse des Stifts im Wesentlichen nicht verkippt.

3. Einheit nach mindestens einem der Ansprüche 1 bis 2,
**dadurch gekennzeichnet, dass**
der Grundkörper (10) stufenförmig ausgebildet ist mit einer Dicke D₂ im Bereich der Durchführung und einem Flansches (30) oder Vorsprunges mit einer geringeren Dicke D₃ als der Dicke D₂ des Grundkörpers (10), wobei zumindest eine Nut oder Vertiefung im Bereich des Vorsprungs oder Flansches (30) ausgebildet ist.

4. Einheit nach Anspruch 3,
**dadurch gekennzeichnet, dass**
die erste und die zweite Nut (100, 102) oder erste und zweite Folge von nebeneinander angeordneten Einstichen eine Tiefe (T₁, T₂) aufweisen, die größer als die Hälfte der Dicke D₃, des Grundkörpers im Bereich des Flansches oder Vorsprungs des Grundkörpers (10) ist.

5. Einheit nach Anspruch 3 oder 4,
**dadurch gekennzeichnet, dass**
die erste Grundkörperfläche (104) mit der ersten Nut oder Vertiefung (100) im Bereich der Dicke D₂ des Grundkörpers (10) liegt und die zweite Nut oder Vertiefung (102) sich in der zweiten Grundkörperfläche (106) des Grundkörpers gegenüberliegend zur ersten Grundkörperfläche befindet.

6. Einheit nach Anspruch 5,
**dadurch gekennzeichnet, dass**
die Tiefen (T₁, T₂) der an gegenüberliegenden Flächen (104, 106) des Grundkörpers eingebrachten ersten und zweiten Nut und/oder Vertiefung (100,102) so gewählt sind, dass sich die Ebene der tiefsten Punkte (P₁) der ersten Nut (100) auf der ersten Grundkörperfläche (104) unterhalb oder oberhalb der Ebene der tiefsten Punkte (P₂) der zweiten Nut auf der zweiten Grundkörperfläche (106) befindet.

7. Einheit nach wenigstens einem der Ansprüche 5 bis 6,
**dadurch gekennzeichnet, dass**
die erste und zweite Nut (100, 102) durch eine erste und zweite Folge von nebeneinander angeordneten Einstichen mit einem Abstand A zueinander ausgebildet werden und der Abstand A bevorzugt im Bereich 0,1 mm bis 0,5 mm liegt.

8. Einheit nach einem der Ansprüche 1 bis 7,
**dadurch gekennzeichnet, dass**
das Glas- oder Glaskeramikmaterial nachfolgende Komponenten in mol.% umfasst:
| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, bevorzugt 17-40 mol-% |
| BaO | 0-20 mol-%, insbesondere 0-20 mol-%, bevorzugt 5-20 mol-% |
| Bi₂O₃ | 0-10 mol-%, insbesondere 1-5 mol-%, bevorzugt 2-5 mol-%. |

9. Kombination aus einem Gehäuseteil (20) eines Gehäuses, insbesondere eines Batteriegehäuses oder eines Kondensatorgehäuses, bevorzugt eines Superkondensatorgehäuses, mit einer darin aufgenommenen Einheit gemäß einem der Ansprüche 1 bis 8, wobei das Gehäuseteil (20) wenigstens eine Öffnung umfasst, in der die Einheit gemäß einem der Ansprüche 1 bis 8 aufgenommen ist,
**dadurch gekennzeichnet, dass**
das Gehäuseteil (20) einen Ausschnitt oder Gegenflansch (25) aufweist, der einen Teil des Grundkörpers (10), insbesondere einen Vorsprung (30), bevorzugt einen Flansch, aufnimmt.

10. Kombination nach Anspruch 9,
**dadurch gekennzeichnet, dass**
im Gegenflansch (25) die Dicke D₄ des Gehäuseteils reduziert ist, bevorzugt in Form einer Stufenbohrung.

11. Kombination nach wenigstens einem der Ansprüche 9 bis 10,
**dadurch gekennzeichnet, dass**
der Gegenflansch (25) eine im Wesentlichen senkrecht zum Leiter verlaufende erste Grenzfläche (28) und der Teil des Grundkörpers, insbesondere der Vorsprung oder Flansch (30), eine im Wesentlichen senkrecht zum Leiter verlaufende zweite Grenzfläche (26) umfasst und erste und zweite Grenzfläche (26, 28) einander gegenüber liegen, wobei bevorzugt der Gegenflansch (25) in den Vorsprung oder Flansch (30) des Grundkörpers jeweils L-förmig eingreifen.

12. Kombination nach Anspruch 11,
**dadurch gekennzeichnet, dass**
erste und zweite Grenzfläche (26, 28) fest verbunden sind, insbesondere hermetisch dicht verbunden sind, bevorzugt durch Schweißen, insbesondere Laserschweißen, wobei insbesondere das Laserschweißen, eine Überlapp- und/oder Stumpfschweißung umfasst.

13. Kombination nach einem der Ansprüche 9 bis 12,
**dadurch gekennzeichnet, dass**
das Gehäuseteil (20) eine Dicke D₁ und der Grundkörper (10) eine Dicke D₂, die im Wesentlichen der Einglasungslänge (EL) entsprechen, aufweisen und die Dicke D₁ im Bereich 20% bis 80 % der Dicke D₂ liegt.

14. Kombination nach einem der Ansprüche 9 bis 13, wobei das Gehäuseteil aus einem Leichtmetall und/oder einer Leichtmetalllegierung besteht, insbesondere aus Aluminium, einer Aluminiumlegierung, Titan und/oder einer Titanlegierung,
und/oder
wobei der Grundkörper aus einem Leichtmetall und/oder einer Leichtmetalllegierung besteht, insbesondere aus Aluminium, einer Aluminiumlegierung, bevorzugt einer Aluminiumlegierung mit Mn, Mg, Si, Zr, bevorzugt einer Aluminiumlegierung mit einem Mg-Anteil von 2 bis 10 Gew.-%, insbesondere 3 bis 8 Gew.-%, Titan und/oder einer Titanlegierung.

15. Kombination nach einem der Ansprüche 9 bis 14, wobei der Leiter (12) umfasst oder besteht aus Kupfer und/oder einem Stahl und/oder einer Stahllegierung und/oder einem Leichtmetall und/oder einer Leichtmetalllegierung.

## Claims

1. Unit consisting of a main part with a glazed-in conductor, comprising a main part (10) having at least one opening (13), at least one conductor (12, 1261), in particular a substantially pin-shaped conductor (12, 1261), and a glass or glass-ceramic material (14, 1262), wherein the at least one conductor (12, 1261) in the glass or glass-ceramic material (14, 1262) is guided through the opening (13) of the main part (10) and is vitrified therein,
**characterized in that**
the main part (10) has at least two circumferential grooves (100, 102) and/or depressions at a distance A from one another, wherein a first groove (100) and/or depression is arranged in a first main part surface (104) and a second groove (102) and/or depression is arranged in an opposite second main part surface (106), as a result of which a thermal barrier is provided and the main part (10) is designed to be deformable in a spring-like, in particular accordion-like, manner when subjected to a mechanical load in the direction perpendicular to the axis of the conductor (12).

2. Unit according to claim 1,
**characterized in that**
the axis of the pin (12) essentially does not tilt when the main part (10) is mechanically loaded in the direction perpendicular to the axis of the pin (12).

3. Unit according to at least one of claims 1 to 2,
**characterized in that**
the main part (10) is formed in a stepped shape with a thickness D₂ in the region of the leadthrough and a flange (30) or projection with a thickness D₃ less than the thickness D₂ of the main part (10), wherein at least one groove or depression is formed in the region of the projection or flange (30).

4. Unit according to claim 3,
**characterized in that**
the first and second grooves (100, 102) or first and second series of punctures arranged next to one another have a depth (T₁, T₂) which is greater than half the thickness D₃ of the main part in the region of the flange or projection of the main part (10).

5. Unit according to claim 3 or 4,
**characterized in that**
the first main part surface (104) with the first groove or depression (100) is located in the region of the thickness D₂ of the main part (10) and the second groove or depression (102) is located in the second main part surface (106) of the main part opposite the first main part surface.

6. Unit according to claim 5,
**characterized in that**
the depths (T₁, T₂) of the first and second groove and/or depression (100, 102) introduced on opposite surfaces (104, 106) of the main part are selected such that the plane of the deepest points (P₁) of the first groove (100) on the first main part surface (104) is located below or above the plane of the deepest points (P₂) of the second groove on the second main part surface (106).

7. Unit according to at least one of claims 5 to 6,
**characterized in that**
the first and second grooves (100, 102) are formed by a first and second sequence of punctures arranged next to each other at a distance A from each other and the distance A is preferably in the range 0.1 mm to 0.5 mm.

8. Unit according to one of claims 1 to 7,
**characterized in that**
the glass or glass-ceramic material comprises the following components in mol.%:
| | |
|---|---|
| P₂O₅ | 35-50 mol%, in particular 39-48 mol% |
| Al₂O₃ | 0-14 mol%, in particular 2-12 mol% |
| B₂O₃ | 2-10 mol-%, in particular 4-8 mol-% |
| Na₂O | 0-30 mol-%, in particular 0-20 mol-% |
| M₂O | 0-20 mol-%, in particular 12-20 mol-%, wherein it is possible that M=K, Cs, Rb |
| PbO | 0-10 mol-%, in particular 0-9 mol-% |
| Li₂O | 0-45 mol-%, in particular 0-40 mol-%, preferably 17-40 mol% |
| BaO | 0-20 mol-%, in particular 0-20 mol-%, preferably 5-20 mol-% |
| Bi₂O₃ | 0-10 mol-%, in particular 1-5 mol-%, preferably 2-5 mol-%. |

9. Combination of a housing part (20) of a housing, in particular a battery housing or a capacitor housing, preferably a supercapacitor housing, having a unit accommodated therein according to one of claims 1 to 8, wherein the housing part (20) comprises at least one opening in which the unit according to one of claims 1 to 8 is accommodated,
**characterized in that**
the housing part (20) has a cutout or counterflange (25) which accommodates a portion of the main part (10), in particular a projection (30), preferably a flange.

10. Combination according to claim 9,
**characterized in that**
the thickness D₄ of the housing part is reduced in the counterflange (25), preferably in the form of a stepped bore.

11. Combination according to at least one of claims 9 to 10,
**characterized in that**
the counterflange (25) comprises a first boundary surface (28) extending essentially perpendicular to the conductor and the portion of the main part, in particular the projection or flange (30), comprises a second boundary surface (26) extending essentially perpendicular to the conductor and the first and second boundary surfaces (26, 28) lie opposite one another, wherein the counterflange (25) preferably engages in the projection or flange (30) of the main part in an L-shape in each case.

12. Combination according to claim 11,
**characterized in that**
the first and second boundary surfaces (26, 28) are firmly connected, in particular hermetically sealed, preferably by welding, in particular laser welding, wherein the laser welding in particular comprises an overlap and/or butt weld.

13. Combination according to one of claims 9 to 12,
**characterized in that**
the housing part (20) has a thickness D₁ and the main part (10) has a thickness D₂, which essentially correspond to the glazing length (EL), and the thickness D₁ is in the range 20% to 80% of the thickness D₂.

14. Combination according to one of claims 9 to 13, wherein the housing part consists of a light metal and/or a light metal alloy, in particular of aluminum, an aluminum alloy, titanium and/or a titanium alloy,
and/or
wherein the main part consists of a light metal and/or a light metal alloy, in particular of aluminum, an aluminum alloy, preferably an aluminum alloy with Mn, Mg, Si, Zr, preferably an aluminum alloy with an Mg content of 2 to 10% by weight, in particular 3 to 8% by weight, titanium and/or a titanium alloy.

15. Combination according to one of claims 9 to 14, wherein the conductor (12) comprises or consists of copper and/or a steel and/or a steel alloy and/or a light metal and/or a light metal alloy.

## Revendications

1. Unité formée d'un corps de base avec un conducteur enchâssé dans du verre, comprenant un corps de base (10) avec au moins une ouverture (13), au moins un conducteur (12, 1261), en particulier un conducteur (12, 1261) sensiblement en forme de broche, et un matériau à base de verre ou de vitrocéramique (14, 1262), dans laquelle l'au moins un conducteur (12, 1261) est introduit dans le matériau à base de verre ou de vitrocéramique (14, 1262) à travers l'ouverture (13) du corps de base (10) et enchâssé dans celui-ci,
**caractérisée en ce que**
le corps de base (10) comporte au moins deux rainures (100, 102) et/ou creux circonférentiels à une distance A l'un de l'autre, une première rainure (100) et/ou un premier creux étant disposés dans une première surface de corps de base (104) et une deuxième rainure (102) et/ou un deuxième creux dans une deuxième surface de corps de base (106) opposée, créant ainsi une barrière thermique, et le corps de base (10) est conçu pour pouvoir se déformer comme un ressort, en particulier en accordéon, en cas de contrainte mécanique dans une direction perpendiculaire à l'axe du conducteur (12).

2. Unité selon la revendication 1,
**caractérisée en ce que**
l'axe de la broche ne bascule sensiblement pas lorsqu'une contrainte mécanique est exercée sur le corps de base (10) dans une direction perpendiculaire à l'axe de la broche (12).

3. Unité selon l'une au moins des revendications 1 à 2,
**caractérisée en ce que**
le corps de base (10) est conformé en gradins avec une épaisseur D₂ au niveau de la traversée et une bride (30) ou une saillie d'une épaisseur D₃ inférieure à l'épaisseur D₂ du corps de base (10), au moins une rainure ou un creux étant formé au niveau de la saillie ou de la bride (30).

4. Unité selon la revendication 3,
**caractérisée en ce que**
la première rainure et la deuxième (100, 102) ou la première série d'encoches juxtaposées et la deuxième ont une profondeur (T₁, T₂) supérieure à la moitié de l'épaisseur D₃ du corps de base au niveau de la bride ou de la saillie du corps de base (10).

5. Unité selon la revendication 3 ou 4,
**caractérisée en ce que**
la première surface de corps de base (104) avec la première rainure ou le premier creux (100) se trouve dans la région d'épaisseur D₂ du corps de base (10) et la deuxième rainure ou le deuxième creux (102) se trouve dans la deuxième surface de corps de base (106) du corps de base en face de la première surface de corps de base.

6. Unité selon la revendication 5,
**caractérisée en ce que**
les profondeurs (T₁, T₂) des premières et deuxièmes rainures et/ou creux (100,102) formées dans les surfaces (104, 106) du corps de base qui se font face sont choisies de telle façon que le plan des points les plus profonds (P₁) de la première rainure (100) se trouve sur la première surface de corps de base (104) en dessous ou au-dessus du plan des points les plus profonds (P₂) de la deuxième rainure sur la deuxième surface de corps de base (106).

7. Unité selon l'une au moins des revendications 5 à 6,
**caractérisée en ce que**
la première rainure et la deuxième (100, 102) sont formées par une première et une deuxième séries d'encoches disposées les unes à côté des autres à une distance A les unes des autres et la distance A est de préférence comprise entre 0,1 mm et 0,5 mm.

8. Unité selon l'une des revendications 1 à 7,
**caractérisée en ce que**
le matériau à base de verre ou de vitrocéramique contient les composants suivants, en % molaire :
| | |
|---|---|
| P₂O₅ | 35 à 50 % molaires, en particulier 39 à 48 % molaires |
| Al₂O₃ | 0 à 14 % molaires, en particulier 2 à 12 % molaires |
| B₂O₃ | 2 à 10 % molaires, en particulier 4 à 8 % molaires |
| Na₂O | 0 à 30 % molaires, en particulier 0 à 20 % molaires |
| M₂O | 0 à 20 % molaires, en particulier 12 à 20 % molaires, où M peut être K, Cs, Rb |
| PbO | 0 à 10 % molaires., en particulier 0 à 9 % molaires |
| Li₂O | 0 à 45 % molaires, en particulier 0 à 40 % molaires, de préférence 17 à 40 % molaires |
| BaO | 0 à 20 % molaires, en particulier 0 à 20 % molaires, de préférence 5 à 20 % molaires |
| Bi₂O₃ | 0 à 10 % molaires, en particulier 1 à 5 % molaires, de préférence 2 à 5 % molaires. |

9. Combinaison d'une partie de boîtier (20) d'un boîtier, en particulier d'un coffre de batterie ou d'un coffre de condensateur, de préférence d'un coffre de supercondensateur, dans laquelle est logée une unité selon l'une des revendications 1 à 8, dans laquelle la partie de boîtier (20) comprend au moins une ouverture dans laquelle est logée l'unité selon l'une des revendications 1 à 8, **caractérisée en ce que**
la partie de boîtier (20) comporte une découpe ou une contre-bride (25) qui reçoit une partie du corps de base (10), en particulier une saillie (30), de préférence une bride.

10. Combinaison selon la revendication 9,
**caractérisée en ce que**
l'épaisseur D₄ de la partie de boîtier est réduite dans la contre-bride (25), de préférence sous la forme d'un perçage étagé.

11. Combinaison selon l'une au moins des revendications 9 bis 10,
**caractérisée en ce que**
la contre-bride (25) comprend une première surface de délimitation (28) sensiblement perpendiculaire au conducteur et la partie du corps de base, en particulier la saillie ou la bride (30), comprend une deuxième surface de délimitation (26) sensiblement perpendiculaire au conducteur et les première et deuxième surfaces de délimitation (26, 28) sont placées l'une en face de l'autre, la contre-bride (25) se mettant de préférence en prise en forme de L dans la saillie ou la bride (30) du corps de base.

12. Combinaison selon la revendication 11,
**caractérisée en ce que**
la première surface de délimitation et la deuxième (26, 28) sont assemblées de façon fixe, en particulier assemblées de façon hermétique, de préférence par soudage, en particulier par soudage au laser, le soudage au laser, en particulier, comprenant une soudure à recouvrement et/ou bout à bout.

13. Combinaison selon l'une des revendications 9 à 12,
**caractérisée en ce que**
la partie de boîtier (20) a une épaisseur D₁ et le corps de base (10) une épaisseur D₂ qui correspondent pour l'essentiel à la longueur d'enchâssement dans le verre (EL) et l'épaisseur D₁ se situe entre 20 % et 80 % de l'épaisseur D₂.

14. Combinaison selon l'une des revendications 9 à 13, dans laquelle la partie de boîtier est faite d'un métal léger et/ou d'un alliage léger, en particulier d'aluminium, d'un alliage d'aluminium, de titane et/ou d'un alliage de titane,
et/ou le corps de base est fait d'un métal léger et/ou d'un alliage léger, en particulier d'aluminium, d'un alliage d'aluminium, de préférence d'un alliage d'aluminium avec Mn, Mg, Si, Zr, de préférence d'un alliage d'aluminium avec une proportion de Mg de 2 % à 10 % du poids, en particulier de 3 % à 8 % du poids, de titane et/ou d'un alliage de titane.

15. Combinaison selon l'une des revendications 9 à 14, dans laquelle le conducteur (12) contient ou se compose de cuivre et/ou d'un acier et/ou d'un alliage d'acier et/ou d'un métal léger et/ou d'un alliage léger.
